# EUROPÄISCHE PATENTSCHRIFT

(11) **EP 3 971 415 B1**
(45) Veröffentlichungstag und Bekanntmachung des Hinweises auf die Patenterteilung: **07.08.2024**
(21) Anmeldenummer: 21196840.9
(22) Anmeldetag: 15.09.2021
(51) Int. Cl.: F03D 17/00, G01M 5/00, G01M 7/02

(54) **VERFAHREN ZUM TESTEN EINER ROTORBLATTKOMPONENTE EINES ROTORBLATTS FÜR EINE WINDENERGIEANLAGE UND ROTORBLATTKOMPONENTE**
ROTOR BLADE COMPONENT AND METHOD FOR TESTING A ROTOR BLADE COMPONENT OF A ROTOR BLADE FOR A WIND TURBINE
PROCÉDÉ D'ESSAI D'UN COMPOSANT D'UNE PALE DE ROTOR POUR UNE ÉOLIENNE ET COMPOSANT DE PALE DE ROTOR

(30) Priorität: 21.09.2020 DE 102020124550
(43) Veröffentlichungstag der Anmeldung: 23.03.2022
(73) Patentinhaber: Wobben Properties GmbH, 26607 Aurich (DE)
(72) Erfinder: Bürkner, Falko, 28757 Bremen (DE); Schwabe, Anna, 26603 Aurich (DE)
(74) Vertreter: Eisenführ Speiser

(56) Entgegenhaltungen:
- EP-A1- 3 418 560
- WO-A1-2017/092766
- WO-A1-2019/086636
- US-A1- 2010 122 442

## Beschreibung

Die Erfindung betrifft ein Verfahren zum Testen einer Rotorblattkomponente eines Rotorblatts für eine Windenergieanlage und ein Rotorblattkomponentensegment eines Rotorblatts für eine Windenergieanlage.

Im Entwicklungsprozess, insbesondere im Rahmen von Zertifizierungsverfahren, von Rotorblättern für Windenergieanlagen werden Rotorblätter typischerweise sowohl statischen als auch dynamischen Tests unterzogen. Bei solchen Tests wird ein Rotorblatt in einem Teststand angeordnet und an der Blattwurzel des Rotorblatts fixiert. Bei der Durchführung von dynamischen Tests werden dann üblicherweise an einer Position oder an mehreren Positionen entlang des Rotorblatts zyklische Kräfte aufgebracht. So kann das Rotorblatt beispielsweise zu einer Eigenfrequenzschwingung angeregt werden, indem die zyklische Kraftaufbringung mit einer Frequenz, die einer der Eigenfrequenzen des Rotorblatts entspricht, erfolgt. Zum Testen des Ermüdungsverhaltens eines Rotorblatts in einem Ermüdungstest erfolgt typischerweise eine solche zyklische Kraftaufbringung, bei der das Rotorblatt mit einer Eigenfrequenz des Rotorblatts angeregt wird, um dieses in eine Eigenfrequenzschwingung zu versetzen.

Um die Leistungsfähigkeit und die Kosten von Windenergieanlagen zu verbessern, ist der Trend zu erkennen, dass die Anlagen zunehmend größere Bauformen und/oder höhere Nennleistungen aufweisen. Die größere Bauform bezieht sich insbesondere auf den

Rotordurchmesser und auf die Nabenhöhe der Windenergieanlagen. Rotorblätter moderner Windenergieanlagen können Längen von über 100 Metern aufweisen.

Das Testen, und insbesondere das zyklische Testen, von Rotorblättern ist insgesamt mit einem hohen Zeit- und Kostenaufwand verbunden. Dies gilt insbesondere für sehr lange Rotorblätter. Ein weiteres Problem, das beim Testen von Rotorblättern auftritt, besteht darin, dass abschnittsweise Belastungen am Rotorblatt deutlich oberhalb der für diese Abschnitte geforderten Belastungen auftreten können. Dies kann zu Schädigungen des Rotorblatts führen, wodurch zeit- und kostenaufwändige Reparaturarbeiten und damit verbundene Unterbrechungen des Tests auftreten können.

Das Deutsche Patent- und Markenamt hat in der Prioritätsanmeldung zu vorliegender Anmeldung folgenden Stand der Technik recherchiert: EP 3 418 560 A1.

US 2010/122442 A1 offenbart ein Verfahren, umfassend Zusammenfügen einer integralen Trennwand und einer Turbinenblattschale, um ein Turbinenblatt zu bilden; und Trennen des Blatts in zwei Blattsegmente an einer Stelle, die die integrale Trennwand aufweist, sodass jedes Blattsegment einen Abschnitt der integralen Trennwand und einen Abschnitt der Blattschale umfasst. EP 3 418 560 A1 offenbart einen Prüfstand für ein Längsstrukturelement, wie ein Blattsegment, eine Zwischenblattverbindung oder eine andere Art von Struktur einer Windturbine, auf die eine Reihe von mehrachsigen Biege-, Torsions-, Scher- und Axialbelastungen aufgebracht wird.

Es ist daher die Aufgabe der vorliegenden Erfindung, eine verbesserte Lösung bereitzustellen, welche wenigstens eines der genannten Probleme adressiert. Insbesondere ist es Aufgabe der Erfindung, eine Lösung bereitzustellen, die den Zeit- und Kostenaufwand bei dem dynamischen Testen von Rotorblättern für Windenergieanlagen verringert.

Gemäß einem ersten Aspekt wird die eingangs genannte Aufgabe gelöst durch ein Verfahren zum Testen einer Rotorblattkomponente eines Rotorblatts für eine Windenergieanlage nach Anspruch 1.

Vorzugsweise erfolgt das Teilen der Rotorblattkomponente eines Rotorblatts für eine Windenergieanlage in zwei, drei oder mehrere Rotorblattkomponentensegmente vor dem Einbringen von Ausnehmungen in die Anschlussschnittstelle.

Ein Rotorblatt erstreckt sich in der Regel mit seiner Haupterstreckungsrichtung entlang einer Längsachse von einer Rotorblattwurzel zu einer Rotorblattspitze. Das Teilen der Rotorblattkomponente, beispielsweise des Rotorblatts, erfolgt vorzugsweise mittels Sägen mit einer Seilsäge oder mittels einer Kreissäge. Das Teilen der Rotorblattkomponente erfolgt vorzugsweise entlang einer Ebene, die orthogonal zur Längsachse des Rotorblatts und/oder des Rotorblattkomponentensegments und/oder des Rotorblattsegments und/oder der Rotorblattwurzel angeordnet ist.

Die Anschlussschnittstelle liegt vorzugsweise in einer Ebene, zu der die Längsachse des Rotorblatts und/oder des Rotorblattkomponentensegments und/oder des Rotorblattsegments im Wesentlichen orthogonal orientiert ist. Die Anschlussschnittstelle ist vorzugsweise an dem Anschlussende eines der Rotorblattkomponentensegmente angeordnet.

Die Anschlussschnittstelle kann teilweise oder vollständig durch eines der Rotorblattkomponentensegmente, insbesondere durch einen Teil eines der Rotorblattkomponentensegmente, gebildet werden. Insbesondere kann die Anschlussschnittstelle eine Endebene eines der Rotorblattkomponentensegmente, insbesondere eines Rotorblattsegments, sein. Die Anschlussschnittstelle kann, insbesondere teilweise oder vollständig, durch eine Trennfläche eines der Rotorblattkomponentensegmente, entlang der das Teilen der Rotorblattkomponente erfolgt ist, gebildet werden. Die Anschlussschnittstelle kann, insbesondere teilweise oder vollständig, durch eine Endebene im Bereich von Holmgurten eines der Rotorblattkomponentensegmente gebildet werden.

Die Anschlussschnittstelle kann auch, insbesondere teilweise oder vollständig, an ein Anschlussende eines der Rotorblattkomponentensegmente aufgebracht werden, wobei das Aufbringen der Anschlussschnittstelle vorzugsweise derart erfolgt, dass die Anschlussschnittstelle quer zur Längsachse des Rotorblatts und/oder des Rotorblattkomponentensegments und/oder des Rotorblattsegments innerhalb und/oder außerhalb des Anschlussendes angeordnet ist.

Die Ausnehmungen sind vorzugsweise jeweils im Wesentlichen zylinderförmig ausgebildet. Ferner vorzugsweise weisen die Ausnehmungen jeweils einen im Wesentlichen zylinderförmigen Schaftteil mit einem ersten Durchmesser auf und einen an die Öffnung angrenzenden erweiterten Kopfteil auf mit einem zweiten Durchmesser auf, wobei der zweite Durchmesser größer ist als der erste Durchmesser. In Längsrichtung der Ausnehmungen ist jeweils der Schaftteil vorzugsweise länger als der Kopfteil, insbesondere um ein Vielfaches länger als der Kopfteil. Vorzugsweise ist eine Längsachse jeder der Ausnehmungen im Wesentlichen parallel zu einer Längsachse des Rotorblatts.

Eine weitere bevorzugte Fortbildung zeichnet sich dadurch aus, dass die Anschlussschnittstelle eine Vielzahl von Ausnehmungen, vorzugsweise mindestens 20 oder mindestens 30 oder mindestens 40 Ausnehmungen, aufweist. Die Vielzahl von Ausnehmungen kann einreihig oder mehrreihig, insbesondere zweireihig, angeordnet sein. Dabei ist insbesondere bevorzugt, dass die Ausnehmungen auf einer Umfangslinie eines Polygons liegen oder auf zwei, drei oder mehreren im wesentlichen konzentrischen Polygonen liegen. Vorzugsweise weist das Polygon die Querschnittsform und/oder die Form der Außenkontur des Rotorblattkomponentensegments am Anschlussende auf. Die Ausnehmungen können auch auf einer ellipsenförmigen Bahn oder auf mehreren ellipsenförmigen Bahnen liegen. Es ist ferner bevorzugt, dass die Ausnehmungen in Umfangsrichtung im Wesentlichen äquidistant angeordnet sind.

Ein erster Vorteil eines solchen Verfahrens besteht darin, dass die benötigte Zeit zum Testen eines Rotorblatts deutlich reduziert werden kann, wenn nicht das ungeteilte Rotorblatt getestet wird, sondern mehrere Rotorblattkomponentensegmente, insbesondere Rotorblattsegmente, separat voneinander getestet werden. Die Rotorblattsegmente weisen im Vergleich zum ungeteilten Rotorblatt in der Regel veränderte Eigenfrequenzen auf, sodass die Rotorblattsegmente zu Schwingungen mit höheren Frequenzen angeregt werden können. Dadurch kann in Ermüdungstests eine bestimmte Zyklenanzahl innerhalb einer kürzeren Zeit erreicht werden, wodurch die Gesamtzeit der Tests reduziert werden kann. Die benötigte Zeit zum Testen kann durch das beschriebene Verfahren um mehrere Monate reduziert werden.

Ein weiterer Vorteil besteht darin, dass durch die Verwendung einer Anschlussschnittstelle am Anschlussende eines der Rotorblattkomponentensegmente und durch das Einbringen von Ausnehmungen in die Anschlussschnittstelle ein kostengünstiger, relativ schnell herstellbarer und zuverlässiger Anschluss zur Fixierung an einem Teststand bereitgestellt werden kann.

Ein weiterer Vorteil besteht darin, dass abschnittsweise Überlasten, die oberhalb der für diese Abschnitte geforderten Belastungen liegen, beim Testen von Rotorblattkomponentensegmenten im Vergleich zum Testen von ganzen Rotorblättern deutlich reduziert werden können. Somit können durch die Überlasten bedingte Schädigungen während des Tests reduziert und/oder vermieden werden, wodurch Unterbrechungen der Tests sowie aufwändige Reparaturarbeiten am Rotorblatt reduziert und/oder vermieden werden können. So kann beispielsweise bei einem herkömmlichen Rotorblatttest am ganzen Blatt aufgrund der methodisch bedingten Überlasten an bestimmten Stellen eine 10-fach höhere Belastung im Vergleich zur geforderten Belastung auftreten, während beim Testen von Rotorblattkomponentensegmenten, insbesondere Rotorblattsegmenten, beispielsweise lediglich eine 3,5-fach höhere Belastung im Vergleich zu der geforderten Belastung auftritt.

Ein weiterer Vorteil besteht darin, dass im Fall einer Unterbrechung eines Tests von einem der Rotorblattkomponentensegmente zeitlich parallel stattfindende Tests von weiteren Rotorblattkomponentensegmenten nicht unterbrochen werden müssen. Dies wirkt sich ebenfalls positiv auf die insgesamt zum Testen benötigte Zeit aus.

Gemäß einer bevorzugten Ausführungsform ist vorgesehen, dass die Rotorblattkomponente ein Rotorblatt oder eine Hinterkante eines Rotorblatts oder eine Endkante eines Rotorblatts ist.

Vorzugsweise ist die Rotorblattkomponente ein ganzes Rotorblatt. Ein Rotorblattkomponentensegment kann ein Rotorblattsegment sein. Ein Rotorblattsegment ist insbesondere ein Abschnitt eines Rotorblatts. Ein Rotorblatt kann beispielsweise in zwei oder drei Rotorblattsegmente und gegebenenfalls weitere Rotorblattkomponentensegmente geteilt werden. In einer bevorzugten Ausführungsform kann die Anschlussschnittstelle auf das Anschlussende des Rotorblattkomponentensegments, das ein Segment des Rotorblatts sein kann, aufgebracht werden.

Die Rotorblattkomponente kann auch eine Hinterkante eines Rotorblatts sein. Die Hinterkante eines Rotorblatts ist bei bestimmungsgemäßer Bewegung des Rotorblattes im Wesentlichen in entgegengesetzten Richtung zur Bewegungs-, also Drehrichtung, des Rotorblattes und damit des aerodynamischen Rotors der Windenergieanlage gerichtet. In einer bevorzugten Ausführungsform kann die Anschlussschnittstelle auf das Anschlussende des Rotorblattkomponentensegments, das ein Teil der Hinterkante sein kann, aufgebracht werden.

Die Rotorblattkomponente kann auch eine Endkante eines Rotorblatts sein. Vorzugsweise ist die Endkante an dem Rotorblatt in einem Bereich der Hinterkante, beispielsweise von einem mittleren Bereich des Rotorblatts bis zur Rotorblattspitze, angeordnet. Eine solche Endkante kann als dreidimensionales glasfaserverstärktes Element ausgebildet sein und/oder Rotorblattmaterial umfassen oder daraus bestehen. In einer bevorzugten Ausführungsform kann die Anschlussschnittstelle auf das Anschlussende des Rotorblattkomponentensegments, das ein Teil der Endkante sein kann, aufgebracht werden.

Ferner umfasst das Verfahren Testen des Rotorblattkomponentensegments an einem Teststand.

Es ist ferner bevorzugt, dass das Verfahren umfasst: Aufbringen der Anschlussschnittstelle an das Anschlussende, und/oder Herstellen der Rotorblattkomponente eines Rotorblatts für eine Windenergieanlage, und/oder Anordnen von Verbindungselementen und/oder Zugelementen in einigen oder allen Ausnehmungen, und/oder Transportieren des Rotorblattkomponentensegments zu einem Teststand, und/oder Anschließen des Rotorblattkomponentensegments an einen Teststand, und/oder Demontieren des Rotorblattkomponentensegments von einem Teststand, und/oder Entsorgen des Rotorblattkomponentensegments.

Es ist bevorzugt, wenn nach dem Aufbringen der Anschlussschnittstelle an dem Anschlussende eines der Rotorblattkomponentensegmente ein Teil der Anschlussschnittstelle und ein Teil des Anschlussendes, vorzugsweise mittels Sägen mit einer Seilsäge oder mittels einer Kreissäge, abgetrennt wird, sodass die Anschlussschnittstelle und das Anschlussende Kanten aufweisen, die in einer Ebene, die im Wesentlichen quer zu einer Rotorblattlängsachse angeordnet ist, angeordnet sind. Vorzugsweise werden die Kante der Anschlussschnittstelle und die Kante des Anschlussendes durch einen gemeinsamen Sägeschnitt gebildet. Vorzugsweise ist die Anschlussschnittstelle nach dem Aufbringen der Anschlussschnittstelle an das Anschlussende stoffschlüssig mit dem Rotorblattkomponentensegment verbunden.

Mit einer Anschlussschnittstelle, die auf einem der Rotorblattkomponentensegmente aufgebracht wird und wie beschrieben ausgebildet ist, ist es auf vorteilhafte Weise möglich Rotorblattkomponentensegmente an einen Teststand anzubinden. Eine solche Anschlussschnittstelle kann unabhängig von der Form und/oder Kontur des Rotorblattkomponentensegments und der Form und/oder Kontur des Rotorblattkomponentensegments auf das Rotorblattkomponentensegment aufgebracht werden. Eine solche Anschlussschnittstelle kann unabhängig von der Form und/oder Kontur des Anschlussendes des Rotorblattkomponentensegments und der Form und/oder Kontur des Anschlussendes des Rotorblattkomponentensegments auf das Rotorblattkomponentensegment aufgebracht werden.

Vorzugsweise umfasst das Herstellen der Rotorblattkomponente eines Rotorblatts für eine Windenergieanlage das Herstellen eines Rotorblatts. Das Herstellen der Rotorblattkomponente eines Rotorblatts kann auch das Herstellen einer Hinterkante und/oder Endkante umfassen.

Vorzugsweise kann in jede der Ausnehmungen ein Verbindungselement und/oder ein Zugelement aufgenommen werden. Das in einer der Ausnehmungen aufgenommene Zugelement weist vorzugsweise ein Außengewinde auf, wobei das Innengewinde der Ausnehmung und das Außengewinde des Zugelements vorzugsweise für einen Eingriff miteinander ausgebildet sind. Es ist bevorzugt, wenn das Zugelement Stahl umfasst oder daraus besteht. Vorzugsweise wird das in einer der Ausnehmungen aufgenommene Zugelement mit seinem aus der Ausnehmung herausragenden Ende in einem Teststand angeschlossen werden zur Befestigung des Rotorblattkomponentensegments an dem Teststand.

Es ist bevorzugt, wenn zwischen dem Rotorblattkomponentensegment und dem Teststand, an den das Rotorblattkomponentensegment angeschlossen wird, Ausgleichsscheiben angeordnet sind. Die Ausgleichsscheiben können Unebenheiten an der Stirnseite des Rotorblattkomponentensegments ausgleichen, sodass eine zuverlässige Verbindung zwischen dem Teststand und dem Rotorblattkomponentensegment hergestellt werden kann. Es können eine oder mehrere Ausgleichsscheiben verwendet werden. Vorzugsweise werden Ausgleichsscheiben mit unterschiedlichen Dicken verwendet, sodass alle Unebenheiten ausgeglichen werden.

Vorzugsweise ist eine der Anzahl von Ausnehmungen entsprechende Anzahl an Zugelementen vorgesehen, wobei vorzugsweise in jeder Ausnehmung ein Zugelement angeordnet ist oder angeordnet werden kann. In einer weiteren bevorzugten Ausführungsform ist vorgesehen, dass die Zugelemente in den Ausnehmungen verklebt sind. Insbesondere ist bevorzugt, dass die Zugelemente in den Ausnehmungen verschraubt und verklebt sind. Hierzu wird vor dem Einbringen der Zugelemente in die Ausnehmungen ein Klebstoff in die Ausnehmungen eingebracht. Als Klebstoff kommen vorzugsweise dünnflüssige Klebstoffe und/oder Klebstoffe auf Epoxid- und/oder Polyurethan- und/oder Methylacrylatbasis zum Einsatz.

In einer weiteren bevorzugten Ausführungsform ist vorgesehen, dass das Rotorblattkomponentensegment und/oder das Anschlussmaterial eine Steifigkeit aufweist, die geringer ist, insbesondere um ein Vielfaches geringer ist, vorzugsweise um mindestens das Fünffache geringer ist, beispielsweise um mindestens das Siebenfache geringer ist, als die Steifigkeit eines Materials des Zugelements, wobei als Maß der Steifigkeit insbesondere der Elastizitätsmodul und/oder der Schubmodul des jeweiligen Materials dient.

Es ist bevorzugt, wenn die Verfahrensschritte in der folgenden Reihenfolge erfolgen: Herstellen der Rotorblattkomponente eines Rotorblatts für eine Windenergieanlage, Aufbringen der Anschlussschnittstelle an das Anschlussende, Anordnen von Verbindungselementen und/oder Zugelementen in einigen oder allen Ausnehmungen, Transportieren des Rotorblattkomponentensegments zu einem Teststand, Anschließen des Rotorblattkomponentensegments an einen Teststand, Testen des Rotorblattkomponentensegments an einem Teststand, Demontieren des Rotorblattkomponentensegments von dem Teststand.

In einer bevorzugten Ausführungsform ist vorgesehen, dass einige oder alle Ausnehmungen gleich ausgebildet sind, und/oder einige oder alle Ausnehmungen ausgebildet sind zur Aufnahme von Verbindungselementen und/oder Zugelementen zum Anschließen des Rotorblattkomponentensegments an einen Teststand, und/oder eine jeweilige Umfangsfläche einiger oder aller Ausnehmungen von einem Anschlussmaterial gebildet ist, und/oder einige oder alle Ausnehmungen als Sacklöcher ausgebildet sind, und/oder einige oder alle Ausnehmungen als Durchgangslöcher ausgebildet sind, und/oder eine jeweilige Umfangsfläche einiger oder aller Ausnehmungen ein Innengewinde aufweist, und/oder einige oder alle Ausnehmungen als Bohrungen ausgebildet sind, und/oder einige oder alle Ausnehmungen äquidistant voneinander beabstandet sind.

Es ist bevorzugt, wenn die Ausnehmungen den gleichen Durchmesser und die gleiche Länge aufweisen. Ferner ist es bevorzugt, dass die Verbindungselemente und/oder Zugelemente mit den Ausnehmungen formschlüssig und/oder stoffschlüssig verbunden sind und mit dem Teststand formschlüssig und/oder stoffschlüssig verbunden sind. Vorzugsweise sind die Ausnehmungen als Sacklöcher ausgebildet, wobei die Öffnung in der Stirnfläche der Anschlussschnittstelle liegt. Ein Vorteil liegt darin, dass keine Hülsen in den Ausnehmungen zur Kraftübertragung zwischen den Verbindungselementen und der Anschlussschnittstelle vorhanden sein müssen.

In einer bevorzugten Ausführungsform ist vorgesehen, dass die Anschlussschnittstelle ein Anschlussmaterial umfasst oder daraus besteht, und/oder das Aufbringen einer Anschlussschnittstelle ein Auflaminieren von Anschlussmaterial ist oder umfasst, und/oder ein erstes Ende der Anschlussschnittstelle mit dem Anschlussende des Rotorblattkomponentensegments fluchtet, und/oder ein zweites Ende der Anschlussschnittstelle beabstandet ist von einem dem Anschlussende des Rotorblattkomponentensegments gegenüberliegenden Ende des Rotorblattkomponentensegments, und/oder das erste und das zweite Ende der Anschlussschnittstelle parallel zueinander sind.

Es ist bevorzugt, dass die Rotorblattkomponentensegmente ein Rotorblattmaterial aufweisen oder im Wesentlichen aus einem Rotorblattmaterial bestehen. Es ist ferner bevorzugt, dass die Anschlussschnittstelle ein Anschlussmaterial aufweist oder im Wesentlichen aus einem Anschlussmaterial besteht. In einer bevorzugten Ausführungsform ist vorgesehen, dass das Rotorblattmaterial und das Anschlussmaterial identisch sind. Das Anschlussmaterial dient vorzugsweise als Aufdickung und/oder Verstärkung am Anschlussende. Die Anschlussschnittstelle und/oder andere Teile der Rotorblattkomponentensegmente können vorzugsweise ganz oder überwiegend aus Anschlussmaterial und/oder Rotorblattmaterial bestehen.

Unter einem Auflaminieren von Anschlussmaterial ist insbesondere ein Aufbringen von Anschlussmaterial mittels Laminieren zu verstehen, wobei vorzugsweise mehrere Lagen aus Faser-Kunststoff-Verbundmaterial aufgebracht werden.

Eine bevorzugte Weiterbildung zeichnet sich dadurch aus, dass das Anschlussmaterial ein faserverstärktes Verbundmaterial, insbesondere ein Faser-Kunststoff-Verbundmaterial, vorzugsweise ein glasfaserverstärktes Epoxidharz-Verbundmaterial, ist oder ein solches umfasst, und/oder das Anschlussmaterial mit einem Material der Rotorblattkomponente identisch und/oder gegenüber einem Material der Rotorblattkomponente verstärkt ist, und/oder die Anschlussschnittstelle auf einer Innenseite und/oder einer Außenseite des Anschlussendes des Rotorblattkomponentensegments angeordnet ist, und/oder sich die Anschlussschnittstelle über einen Großteil oder den gesamten Innenumfang und/oder Außenumfang des Anschlussendes des Rotorblattkomponentensegments erstreckt.

Als Fasermaterialien des faserverstärkten Verbundmaterials können vorzugsweise organische Fasern und/oder anorganische Fasern und/oder Naturfasern zum Einsatz kommen. Anorganische Fasern sind beispielsweise Glasfasern, Basaltfasern, Borfasern, Keramikfasern oder Stahlfasern. Organische Fasern sind beispielsweise Aramidfasern, Kohlenstofffasern, Polyesterfasern und Polyethylenfasern (insbesondere High Performance Polyethylene (HPPE) Fasern, wie beispielsweise Dyneema-Fasern). Naturfasern sind beispielsweise Hanffasern, Flachsfasern oder Sisalfasern.

Es ist bevorzugt, dass das Matrixmaterial des faserverstärkten Verbundmaterials einen Kunststoff umfasst oder besteht daraus. Der Kunststoff umfasst vorzugsweise ein Thermoplast und/oder ein Duroplast oder besteht daraus. Besonders bevorzugt sind beispielsweise duroplastische Kunststoffe, wie Polyesterharz (UP) und/oder Epoxidharz, und/oder thermoplatische Kunststoffe, wie Polyamid. Das Matrixmaterial des faserverstärkten Verbundmaterials kann auch Zement und/oder Beton und/oder Metall und/oder Keramik und/oder Kohlenstoff umfassen oder daraus bestehen.

Eine weitere bevorzugte Weiterbildung ist gekennzeichnet durch Transportieren eines weiteren Rotorblattkomponentensegments oder aller weiteren Rotorblattkomponentensegmente derselben Rotorblattkomponente zu einem Teststand, und/oder Anschließen eines weiteren Rotorblattkomponentensegments oder allerweiteren Rotorblattkomponentensegmente derselben Rotorblattkomponente an einen Teststand, und/oder Testen eines weiteren Rotorblattkomponentensegments oder aller weiteren Rotorblattkomponentensegmente derselben Rotorblattkomponente an einem Teststand, und/oder Demontieren eines weiteren Rotorblattkomponentensegments oder allerweiteren Rotorblattkomponentensegmente derselben Rotorblattkomponente von einem Teststand.

Es ist bevorzugt, wenn mehrere Rotorblattkomponentensegmente derselben Rotorblattkomponente zur gleichen Zeit an einem Teststand angeschlossen sind und/oder getestet werden. Dadurch kann das Testen der Rotorblattkomponente in vorteilhafter Weise in relativ kurzer Zeit durchgeführt werden.

Ferner ist vorgesehen, dass an der Stirnfläche der Anschlussschnittstelle im Bereich der Öffnungen der Ausnehmungen ebene Flächen, vorzugsweise mittels Bohren und/oder Planfräsen, hergestellt werden. Die ebenen Flächen liegen auf zwei oder mehreren verschiedenen Ebenen. Dies hat den Vorteil, dass beim Herstellen der ebenen Flächen nicht darauf geachtet werden muss, dass diese in einer gemeinsamen Ebene. Vielmehr kann im Bereich jeder der Öffnungen der Ausnehmungen eine ebene Fläche erzeugt werden, die in einer Ebene liegt, die verschieden, aber vorzugsweise parallel, ist zu einer oder mehreren ebenen Flächen im Bereich von einer oder mehreren anderen Öffnungen der Ausnehmungen. Durch die Anordnung von Distanzstücken und/oder Spachtelmasse mit unterschiedlichen Dicken kann dann sichergestellt werden, dass die zur Anordnung an einem Teststand vorgesehenen Seiten der Distanzstücke und/oder Spachtelmasse im Wesentlichen in einer gemeinsamen Ebene liegen, so dass beispielsweise ein Stahladapter gut angeschlossen werden kann. Es werden die Abstände der ebenen Flächen von einer gemeinsamen Bezugsebene ermittelt und die Dicken der Distanzstücke und/oder Spachtelmasse auf diese gemessenen Abstände angepasst.

Ferner ist vorgesehen, dass Distanzstücke auf die Stirnfläche der Anschlussschnittstelle im Bereich der Öffnungen der Ausnehmungen, insbesondere an den hergestellten ebenen Flächen, angeordnet werden, und/oder dass auf die Stirnfläche der Anschlussschnittstelle im Bereich der Öffnungen der Ausnehmungen, insbesondere an den hergestellten ebenen Flächen, eine Spachtelmasse aufgebracht wird und/oder angeordnet ist. Vorzugsweise weisen die Distanzstücke voneinander abweichende Dicken auf. Mit einer solchen Spachtelmasse können Unebenheiten auf vorteilhafte Weise ausgeglichen und/oder vermieden werden.

Vorzugsweise werden die Verbindungselemente und/oder Zugelemente in Bohrungen, vorzugsweise Durchgangsbohrungen, eines Stahladapters angeordnet. Vorzugsweise werden die Verbindungselemente und/oder Zugelemente mit einer Verschraubung, insbesondere mittels einer Mutter, die auf dem Verbindungselement und/oder Zugelement angeordnet ist, gegen den Stahladapter verschraubt und/oder verspannt.

Eine weitere bevorzugte Weiterbildung ist gekennzeichnet durch Entsorgen eines weiteren Rotorblattkomponentensegments oder aller weiteren Rotorblattkomponentensegmente derselben Rotorblattkomponente.

Das Entsorgen kann ein Zerkleinern der Rotorblattkomponentensegmente umfassen.

In einer bevorzugten Ausführungsform ist vorgesehen, dass die Anschlussschnittstelle eine Dicke aufweist, die mindestens dem 1,5-fachen eines Durchmessers einiger oder aller Ausnehmungen entspricht, insbesondere mindestens dem 2-fachen, mindestens dem 2,5-fachen oder mindestens dem 3-fachen eines Durchmessers einiger oder aller Ausnehmungen, und/oder die Anschlussschnittstelle eine Dicke aufweist von mindestens 2 cm, vorzugsweise von mindestens 3 cm, von mindestens 4 cm, von mindestens 5 cm, von mindestens 6 cm, von mindestens 7 cm, von mindestens 8 cm, von mindestens 9 cm, von mindestens 10 cm, von mindestens 11 cm, von mindestens 12 cm, oder von mindestens 15 cm, und/oder die Anschlussschnittstelle eine Tiefe aufweist, die mindestens dem 2-fachen eines Durchmessers einiger oder aller Ausnehmungen entspricht, insbesondere mindestens dem 3-fachen, mindestens dem 6-fachen oder mindestens dem 12-fachen eines Durchmessers einiger oder aller Ausnehmungen, und/oder die Anschlussschnittstelle eine Tiefe aufweist von mindestens 10 cm, vorzugsweise von mindestens 15 cm, von mindestens 20 cm, von mindestens 25 cm, von mindestens 30 cm, von mindestens 35 cm, von mindestens 40 cm, von mindestens 45 cm, oder von mindestens 50 cm.

Unter der Dicke der Anschlussschnittstelle ist die Ausdehnung der Anschlussschnittstelle in Dickenrichtung zu verstehen, wobei die Dickenrichtung vorzugsweise orthogonal zur Längsachse des Rotorblattkomponentensegments und/oder der Längsachse des Rotorblattsegments und/oder der Rotorblattlängsachse orientiert ist. Unter der Tiefe der Anschlussschnittstelle ist die Ausdehnung der Anschlussschnittstelle in Längsrichtung zu verstehen, wobei die Längsrichtung vorzugsweise parallel zur Längsachse des Rotorblattkomponentensegments und/oder der Längsachse des Rotorblattsegments und/oder der Rotorblattlängsachse orientiert ist.

Gemäß einem weiteren Aspekt der Erfindung wird die eingangs genannte Aufgabe gelöst durch ein Rotorblattkomponentensegment eines Rotorblatts für eine Windenergieanlage gemäß Anspruch 13.

Der zuvor beschriebene weitere Aspekt und dessen mögliche Fortbildungen weisen Merkmale und Verfahrensschritte auf, die ihn besonders dafür geeignet machen, in einem hier beschriebenen Verfahren und seinen Fortbildungen verwendet zu werden.

Zu den Vorteilen, Ausführungsvarianten und Ausführungsdetails der verschiedenen Aspekte der hier beschriebenen Lösungen und ihrer jeweiligen möglichen Fortbildungen wird auch auf die Beschreibung zu den entsprechenden Merkmalen, Details und Vorteilen der jeweils anderen Aspekte und ihrer Fortbildungen verwiesen.

Bevorzugte Ausführungsbeispiele werden beispielhaft anhand der beiliegenden Figuren beschrieben. Es zeigen:
- Figur 1:: eine schematische Darstellung einer Windenergieanlage;
- Figur 2:: eine schematische Darstellung eines Rotorblattkomponentensegments in Form eines Rotorblattsegments mit einer Anschlussschnittstelle;
- Figur 3a:: eine Schnittdarstellung eines Ausschnitts einer Anschlussschnittstelle an einem Anschlussende, wobei Ausgleichsscheiben an der Anschlussschnittstelle angebracht sind;
- Figur 3b:: eine Schnittdarstellung eines Ausschnitts einer Anschlussschnittstelle an einem Anschlussende, wobei eine Ausgleichsschicht an der Anschlussschnittstelle aufgebracht ist;
- Figur 3c:: eine Schnittdarstellung eines Ausschnitts einer Anschlussschnittstelle an einem Anschlussende, wobei Ausgleichsscheiben an der Anschlussschnittstelle angebracht sind und die Anschlussschnittstelle durch ein Rotorblattkomponentensegment gebildet wird;
- Figur 3d:: eine Schnittdarstellung eines Ausschnitts einer Anschlussschnittstelle an einem Anschlussende, wobei eine Ausgleichsschicht an der Anschlussschnittstelle aufgebracht ist und die Anschlussschnittstelle durch ein Rotorblattkomponentensegment gebildet wird;
- Figur 4a:: eine Schnittdarstellung eines Ausschnitts einer Anschlussschnittstelle an einem Anschlussende;
- Figur 4b:: eine Schnittdarstellung eines Ausschnitts einer Anschlussschnittstelle an einem Anschlussende, wobei die Anschlussschnittstelle durch ein Rotorblattkomponentensegment gebildet wird;
- Figur 5a:: eine schematische Darstellung eines Rotorblattkomponentensegments in Form eines Rotorblattsegments mit einer auf der Innenseite des Rotorblattkomponentensegments aufgebrachten Anschlussschnittstelle;
- Figur 5b:: eine schematische Darstellung eines Rotorblattkomponentensegments in Form eines Rotorblattsegments mit einer auf der Außenseite des Rotorblattkomponentensegments aufgebrachten Anschlussschnittstelle;
- Figur 5c:: eine schematische Darstellung eines Rotorblattkomponentensegments in Form eines Rotorblattsegments mit einer auf der Innenseite und auf der Außenseite des Rotorblattkomponentensegments aufgebrachten Anschlussschnittstelle;
- Figur 6:: eine schematische Darstellung einer Draufsicht auf die Kante eines Rotorblattkomponentensegments mit einer auf der Innenseite und auf der Außenseite des Rotorblattkomponentensegments aufgebrachten Anschlussschnittstelle;
- Figur 7:: eine schematische Darstellung eines Beispiels eines Verfahrens zum Testen einer Rotorblattkomponente eines Rotorblatts für eine Windenergieanlage;
- Figur 8:: eine schematische Darstellung eines weiteren Beispiels eines Verfahrens zum Testen einer Rotorblattkomponente eines Rotorblatts für eine Windenergieanlage.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind.

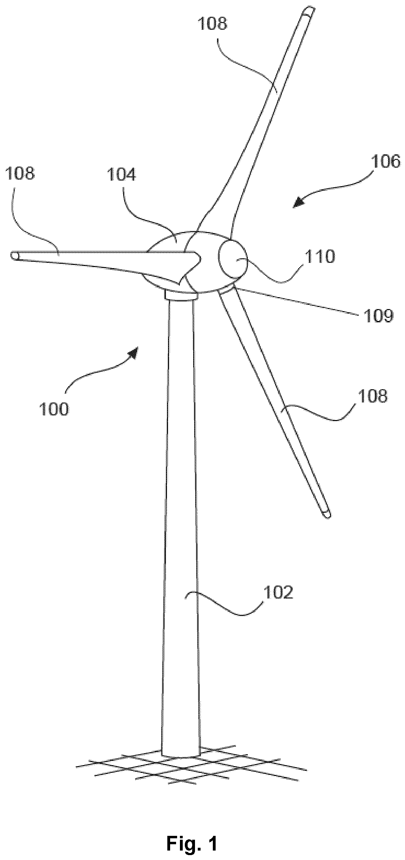

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

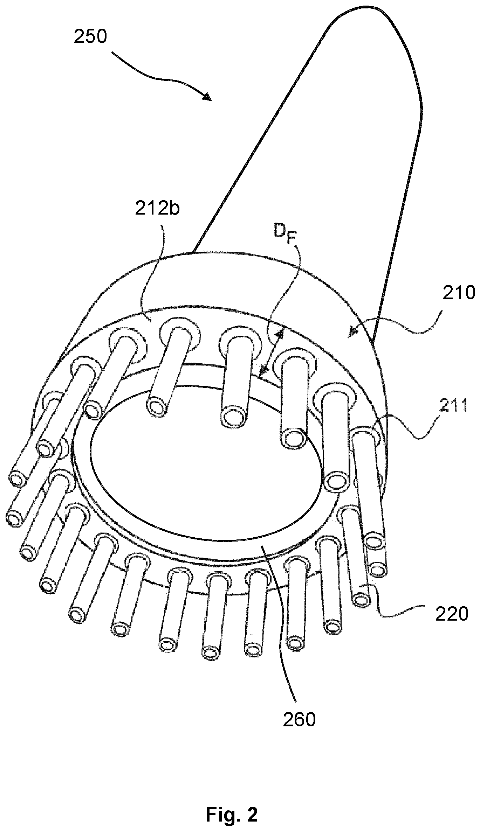

Fig. 2 zeigt eine schematische Darstellung eines Rotorblattsegments 250 mit einer Anschlussschnittstelle 210 mit mehreren Ausnehmungen 211, in die jeweils ein Zugelement 220 eingebracht ist. Die Außenumfangsfläche der jeweiligen Ausnehmungen 211 ist durch das Anschlussmaterial gebildet. Die Öffnungen der Ausnehmungen 211 liegen in der Stirnfläche 212b der Anschlussschnittstelle 210. Die Stirnfläche 212b der Anschlussschnittstelle ist auf der Außenseite des Anschlussendes des Rotorblattsegments 250 aufgebracht. Das Anschlussende des Rotorblattsegments 250 weist eine Stirnfläche 260 auf, die in einer Ebene mit der Stirnfläche 212b der Anschlussschnittstelle 210 liegt. Der Durchmesser der Ausnehmungen 211 entspricht vorzugsweise etwa einem Drittel, vorzugsweise ca. 10 bis 50%, insbesondere ca. 20 bis 40%, der Ausdehnung D_{F} der Anschlussschnittstelle 210 orthogonal zu einer Längsachse der Ausnehmung 211 und/oder des Rotorblattsegments 250.

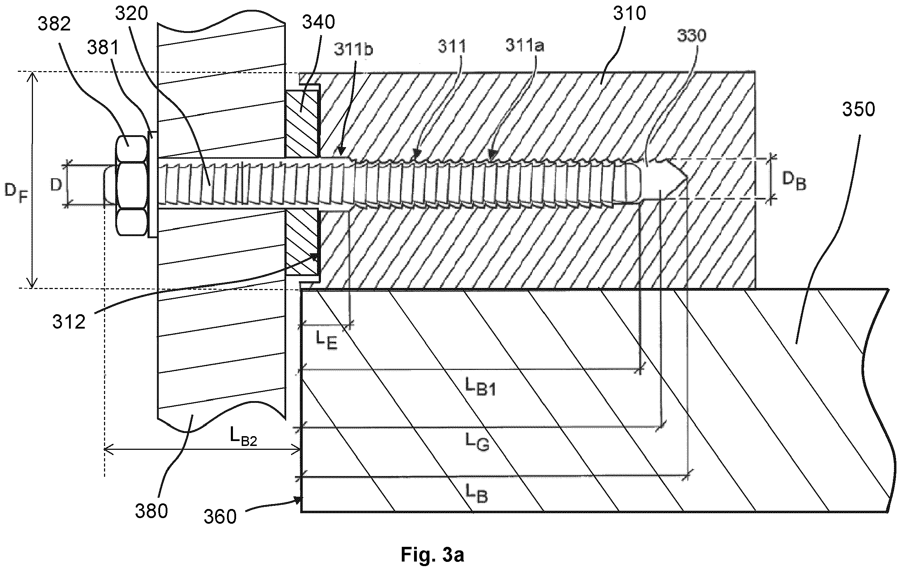

Fig. 3a zeigt einen schematischen Längsschnitt durch eine Ausnehmung 311 in einer Anschlussschnittstelle 310 mit eingebrachtem Zugelement 320 mit einem Durchmesser D und einer Gesamtlänge, die sich aus der Länge L_{B1} des in der Ausnehmung 311 aufgenommenen Teils und der Länge L_{B2} des aus der Ausnehmung 311 herausragenden Teils zusammensetzt. Die Außenumfangsfläche der Ausnehmung 311 ist durch das Anschlussmaterialgebildet. Die Ausnehmung 311 ist als Sackloch ausgebildet, die Öffnung liegt in der Stirnfläche 312 der Anschlussschnittstelle 310. In die Ausnehmung ist Klebstoff 330 eingebracht. Die Ausnehmung 311 ist im Wesentlichen zylinderförmig ausgebildet und weist einen im Wesentlichen zylinderförmigen Schaftteil 311a mit einem ersten Durchmesser D_{B} und einen an die Öffnung angrenzenden erweiterten Kopfteil 311b mit einem zweiten Durchmesser Dε auf, wobei der zweite Durchmesser Dε größer ist als der erste Durchmesser D_{B}. In Längsrichtung der Ausnehmung ist der Schaftteil 311 um ein Vielfaches länger als der Kopfteil 311b mit einer Länge L_{E}. Insgesamt weist die Ausnehmung 311 eine Grundlänge L_{G} und eine Gesamtlänge L_{B} auf. Diese Längserstreckung der Ausnehmung 311 entlang der Längsachse ist länger als die Länge L_{B1} des darin aufzunehmenden Teils des Zugelements 320 und entspricht einem Vielfachen des Durchmessers D_{B} der Ausnehmung 311. Der Durchmesser D_{B} der Ausnehmung 311 entspricht vorzugsweise etwa einem Drittel, vorzugsweise ca. 10 bis 50%, insbesondere ca. 20 bis 40%, der Ausdehnung D_{F} der Anschlussschnittstelle 310 orthogonal zu einer Längsachse der Ausnehmung 311 und/oder zu einer Längsachse des Rotorblattkomponentensegments 350.

Die Anschlussschnittstelle 310 ist in dem gezeigten Ausführungsbeispiel auf einem Anschlussende eines Rotorblattkomponentensegments 350, das ein Rotorblattsegment sein kann, aufgebracht. Das Rotorblattkomponentensegment 350 hat eine Stirnfläche 360, die fluchtend zu der Stirnfläche 312 der Anschlussschnittstelle 310 angeordnet sein kann. Die Stirnfläche 312 der Anschlussschnittstelle 310 ist ein einem Bereich um die Ausnehmungen mittels einem Fräser oder mittels einem Bohrer plan abgetragen, sodass die Stirnfläche 312 eine plane Oberfläche aufweist. Die Stirnfläche 312 dient als Auflagefläche für ein Distanzstück 340. Das Distanzstück 340 liegt an einer Seite an der Stirnfläche 312 und auf der gegenüberliegenden Seite an einem Stahladapter 380 an. Der Stahladapter 380 kann bereits einen Teil des Teststandes darstellen, an den das Rotorblattkomponentensegment 350 über die Anschlussschnittstelle 310 angeschlossen wird. Der Stahladapter weist für das Zugelement 320 eine Durchgangsbohrung auf, in der das Zugelement 320 angeordnet ist. Das Zugelement 320 ist gegen den Stahladapter 380 mit einer Unterlegscheibe 381 und einer Mutter 382, die auf dem Gewinde des Zugelements 320 angeordnet ist, verschraubt.

Vorzugsweise sind alle Zugelemente auf diese Art mit dem Stahladapter 380 verschraubt. Dabei können mehrere Distanzstücke 340 verwendet werden, die unterschiedliche Dicken aufweisen können, wobei die Dicken so ausgewählt werden können, dass die Stirnseiten der Distanzstücke 340, die mit dem Stahladapter 380 in Verbindung stehen, in einer gemeinsamen Ebene liegen.

Die Anschlussschnittstelle 310 kann in dem gezeigten Ausführungsbeispiel innen oder außen an dem Anschlussende des Rotorblattkomponentensegments 350 aufgebracht sein. In der gezeigten Ausführungsform kann die Anschlussschnittstelle 310 somit an der Innenseite oder an der Außenseite an dem Anschlussende des Rotorblattkomponentensegments 350 aufgebracht sein.

Es können auch Ausführungsformen mit mehrreihigen Verbindungen bevorzugt sein. Es können auch Ausführungsformen mit einer Anschlussschnittstelle, die auf der Innenseite und auf der Außenseite an dem Anschlussende des Rotorblattkomponentensegments angeordnet ist, bevorzugt sein. Ferner können auch Ausführungsformen mit einer Anschlussschnittstelle, die zumindest teilweise durch das Rotorblattkomponentensegment, vorzugsweise durch Holmgurte des Rotorblattkomponentensegments, gebildet wird, bevorzugt sein.

Das in der Ausnehmung 311 aufgenommene Zugelement 320 weist ein Außengewinde auf, wobei das Innengewinde der Ausnehmung 311 und das Außengewinde des Zugelements 320 für einen Eingriff miteinander ausgebildet sind.

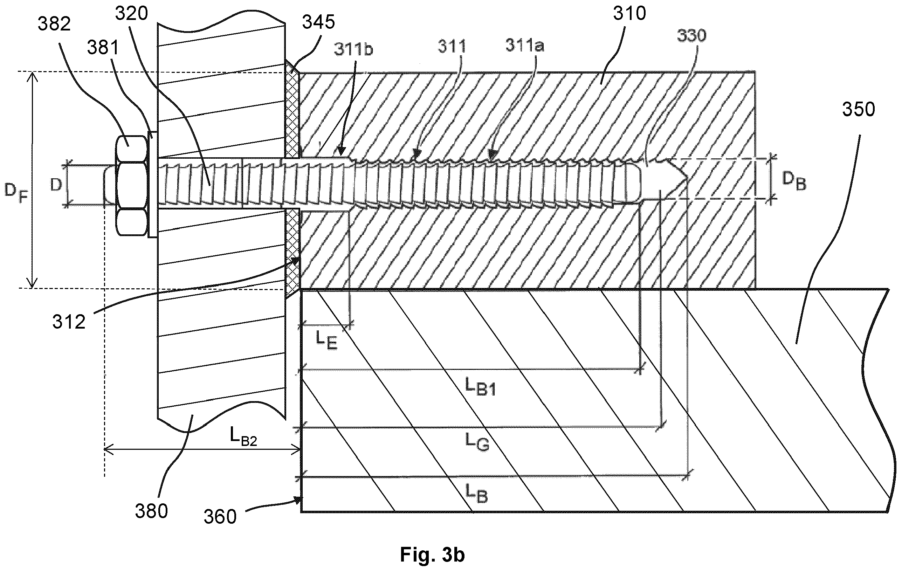

Fig. 3b zeigt einen schematischen Längsschnitt durch eine Ausnehmung 311 in einer Anschlussschnittstelle 310 mit eingebrachtem Zugelement 320 mit einem Durchmesser D und einer Gesamtlänge, die sich aus der Länge L_{B1} des in der Ausnehmung 311 aufgenommenen Teils und der Länge L_{B2} des aus der Ausnehmung 311 herausragenden Teils zusammensetzt. Die Außenumfangsfläche der Ausnehmung 311 ist durch das Anschlussmaterialgebildet. Die Ausnehmung 311 ist als Sackloch ausgebildet, die Öffnung liegt in der Stirnfläche 312 der Anschlussschnittstelle 310. In die Ausnehmung ist Klebstoff 330 eingebracht. Die Ausnehmung 311 ist im Wesentlichen zylinderförmig ausgebildet und weist einen im Wesentlichen zylinderförmigen Schaftteil 311a mit einem ersten Durchmesser D_{B} auf und einen an die Öffnung angrenzenden erweiterten Kopfteil 311b auf mit einem zweiten Durchmesser Dε auf, wobei der zweite Durchmesser Dε größer ist als der erste Durchmesser D_{B}. In Längsrichtung der Ausnehmung ist der Schaftteil 311a um ein Vielfaches länger als der Kopfteil 311b mit einer Länge Lε. Insgesamt weist die Ausnehmung 311 eine Grundlänge L_{G} und eine Gesamtlänge L_{B} auf. Diese Längserstreckung der Ausnehmung 311 entlang der Längsachse ist länger als die Länge L_{B1} des darin aufzunehmenden Teils des Zugelements 320 und entspricht einem Vielfachen des Durchmessers D_{B} der Ausnehmung 311. Der Durchmesser D_{B} der Ausnehmung 311 entspricht vorzugsweise etwa einem Drittel, vorzugsweise ca. 10 bis 50%, insbesondere ca. 20 bis 40%, der Ausdehnung D_{F} der Anschlussschnittstelle 310 orthogonal zu einer Längsachse der Ausnehmung 311 und/oder zu einer Längsachse des Rotorblattkomponentensegments 350.

Die Anschlussschnittstelle 310 ist in dem gezeigten Ausführungsbeispiel auf einem Anschlussende eines Rotorblattkomponentensegments 350, das ein Rotorblattsegment sein kann, aufgebracht. Das Rotorblattkomponentensegment 350 hat eine Stirnfläche 360, die fluchtend zu der Stirnfläche 312 der Anschlussschnittstelle 310 angeordnet sein kann.

Auf die Stirnfläche 312 der Anschlussschnittstelle 310 ist eine Spachtelmasse 345 aufgebracht. Es ist bevorzugt, wenn die Spachtelmasse 345 Epoxidharz umfasst oder im Wesentlichen daraus besteht. Auf der Spachtelmasse 345 wird ein Stahladapter 380 angeordnet. Der Stahladapter 380 kann bereits einen Teil des Teststandes darstellen, an den das Rotorblattkomponentensegment 350 über die Anschlussschnittstelle 310 angeschlossen werden soll. Der Stahladapter 380 weist für das Zugelement 320 eine Durchgangsbohrung auf, in der das Zugelement 320 angeordnet ist. Das Zugelement 320 ist gegen den Stahladapter 380 mit einer Unterlegscheibe 381 und einer Mutter 382, die auf dem Gewinde des Zugelements 320 angeordnet ist, verschraubt. Mit der Spachtelmasse 345 können insbesondere Unebenheiten der Stirnfläche 312 ausgeglichen werden.

Vorzugsweise sind alle Zugelemente auf diese Art mit dem Stahladapter 380 verschraubt. Dabei kann um alle Zugelemente die Spachtelmasse 345 aufgebracht werden. Die Spachtelmasse kann an unterschiedlichen Stellen voneinander abweichende Dicken aufweisen, wobei die Dicken so ausgewählt werden können, dass die Spachtelmasse 345 auf der Seite, auf der die Spachtelmasse 345 mit dem Stahladapter 380 in Verbindung steht, eine Ebene bildet.

Die Anschlussschnittstelle 310 kann insbesondere innen oder außen an dem Anschlussende des Rotorblattkomponentensegments 350 aufgebracht sein. In der gezeigten Ausführungsform kann die Anschlussschnittstelle 310 somit an der Innenseite oder an der Außenseite an dem Anschlussende des Rotorblattkomponentensegments 350 aufgebracht sein.

Es können auch Ausführungsformen mit mehrreihigen Verbindungen bevorzugt sein. Es können auch Ausführungsformen mit einer Anschlussschnittstelle, die auf der Innenseite und auf der Außenseite an dem Anschlussende des Rotorblattkomponentensegments angeordnet ist, bevorzugt sein. Ferner können auch Ausführungsformen mit einer Anschlussschnittstelle, die zumindest teilweise durch das Rotorblattkomponentensegment, vorzugsweise durch Holmgurte des Rotorblattkomponentensegments, gebildet wird, bevorzugt sein.

Das in der Ausnehmung 311 aufgenommene Zugelement 320 weist ein Außengewinde auf, wobei das Innengewinde der Ausnehmung 311 und das Außengewinde des Zugelements 320 für einen Eingriff miteinander ausgebildet sind.

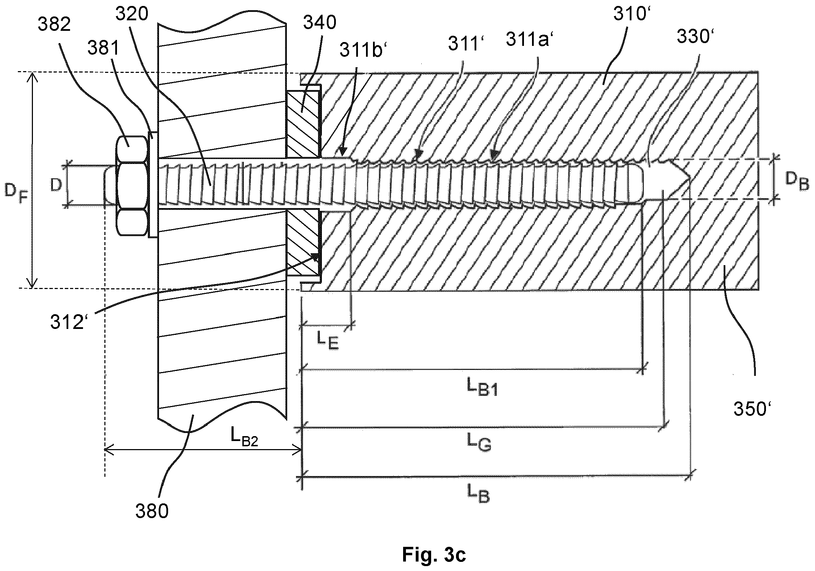

Fig. 3c zeigt eine Schnittdarstellung eines Ausschnitts einer Anschlussschnittstelle 310' an einem Anschlussende, wobei wie in Fig. 3a ein Stahladapter 380 an der Anschlussschnittstelle 310` angebracht ist. Im Unterschied zu dem in Figur 3a gezeigten Ausführungsbeispiel wird in dem in Fig. 3c gezeigten Ausführungsbeispiel die Anschlussschnittstelle 310' durch ein Rotorblattkomponentensegment 350' gebildet. Die Ausnehmung 311' ist in einem Holmgurt des Rotorblattkomponentensegments 350' angeordnet. Das Zugelement 320 wird in der Ausnehmung 311' im Holmgurt aufgenommen. Der übrige Aufbau ist analog zum Aufbau des in Fig. 3a gezeigten Ausführungsbeispiels.

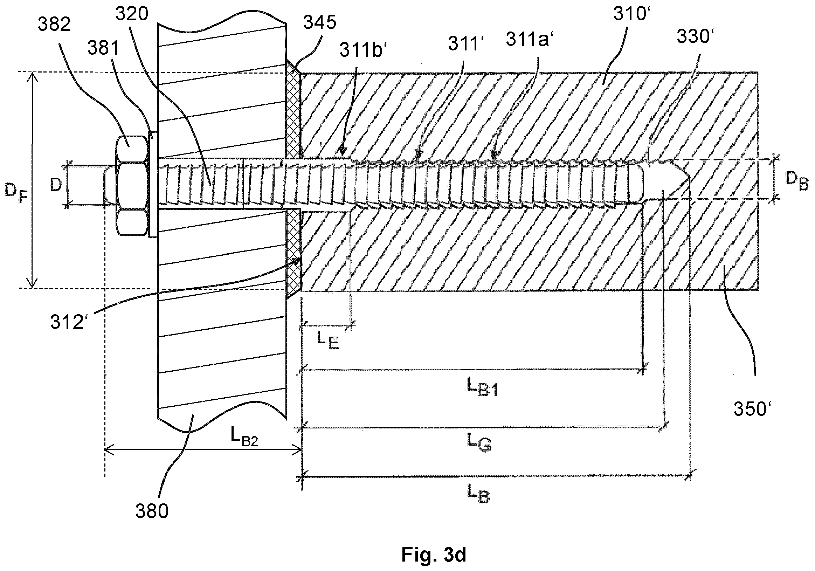

Fig. 3d zeigt eine Schnittdarstellung eines Ausschnitts einer Anschlussschnittstelle 310' an einem Anschlussende, wobei wie in Fig. 3b ein Stahladapter 380 an der Anschlussschnittstelle 310` angebracht ist. Im Unterschied zu dem in Fig. 3b gezeigten Ausführungsbeispiel wird in dem in Fig. 3d gezeigten Ausführungsbeispiel die Anschlussschnittstelle 310' durch ein Rotorblattkomponentensegment 350' gebildet. Die Ausnehmung 311' ist in einem Holmgurt des Rotorblattkomponentensegments 350' angeordnet. Das Zugelement 320 wird in der Ausnehmung 311' im Holmgurt aufgenommen. Der übrige Aufbau ist analog zum Aufbau des in Fig. 3b gezeigten Ausführungsbeispiels.

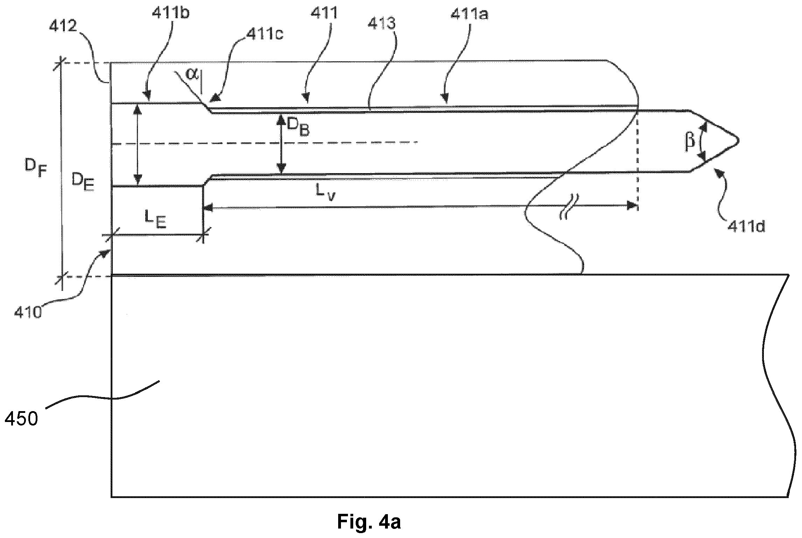

Fig. 4a zeigt einen schematischen Längsschnitt durch eine Ausnehmung 411 in einer Anschlussschnittstelle 410. Die Außenumfangsfläche der Ausnehmung 411 ist durch das Anschlussmaterialgebildet. Die Ausnehmung 411 ist als Sackloch ausgebildet, die Öffnung liegt in der Stirnfläche 412 der Anschlussschnittstelle 410. Die Ausnehmung 411 ist im Wesentlichen zylinderförmig ausgebildet und weist einen im Wesentlichen zylinderförmigen Schaftteil 411a mit einem ersten Durchmesser D_{B} auf und einen an die Öffnung angrenzenden erweiterten Kopfteil 411b auf mit einem zweiten Durchmesser Dε auf, wobei der zweite Durchmesser Dε größer ist als der erste Durchmesser D_{B}. Zwischen dem erweiterten Kopfteil 411b und dem Schaftteil 411a ist ein Übergangsabschnitt 411c ausgebildet, welcher vorzugsweise einen Neigungswinkel a von 30 bis 60°, insbesondere von 45° aufweist. Am geschlossenen Ende des Sacklochs ist ein Endabschnitt 411d ausgebildet, der vorzugsweise einen Neigungswinkel β von 60 bis 120° aufweist. Der Schaftteil 411a weist ein Innengewinde 413 auf, welches direkt in das Anschlussmaterial geschnitten ist.

In Längsrichtung der Ausnehmung ist der Schaftteil 411a mit einer Länge Lv um ein Vielfaches länger als der Kopfteil 411b mit einer Länge Lε. Die Längserstreckung der Ausnehmung 411 entlang der Längsachse entspricht einem Vielfachen des Durchmessers D_{B} der Ausnehmung 411. Der Durchmesser D_{B} der Ausnehmung 411 entspricht vorzugsweise etwa einem Drittel, vorzugsweise ca. 10 bis 50%, insbesondere ca. 20 bis 40%, der Ausdehnung D_{F} der Anschlussschnittstelle 410 orthogonal zu einer Längsachse der Ausnehmung 411 und/oder einer Längsachse des Rotorblatts.

Die Anschlussschnittstelle 410 ist in dem gezeigten Ausführungsbeispiel auf einem Anschlussende eines Rotorblattkomponentensegments 450, das ein Rotorblattsegment sein kann, aufgebracht. Das Rotorblattkomponentensegment 450 hat eine Stirnfläche, die fluchtend zu der Stirnfläche 412 der Anschlussschnittstelle 410 angeordnet ist. Die Anschlussschnittstelle 410 kann insbesondere innen oder außen an dem Anschlussende des Rotorblattkomponentensegments 450 aufgebracht sein. In der gezeigten Ausführungsform kann die Anschlussschnittstelle 410 somit an der Innenseite oder der Außenseite an dem Anschlussende des Rotorblattkomponentensegments 450 aufgebracht sein.

Die Anschlussschnittstellen 210, 310, 410 weisen vorzugsweise ein Anschlussmaterial auf, welches identisch ist mit einem Rotorblattmaterial. Ferner vorzugsweise sind die Anschlussschnittstellen 210, 310, 410 stoffschlüssig mit dem Rotorblattkomponentensegment verbunden.

Über diese Anschlussschnittstellen 210, 310, 410 kann das Rotorblattkomponentensegment jeweils mittels Verbindungselementen und/oder Zugelementen mit einem Teststand fixiert werden zum Testen des Rotorblattkomponentensegments.

Vorzugsweise beträgt der Durchmesser Dε etwa das 1,25-fache des Durchmessers D_{B}. Ferner vorzugsweise beträgt die Länge Lε vorzugsweise etwa das 1,5-fache des Durchmessers D_{B}. Vorzugsweise beträgt die Länge Lv etwa das 6-fache des Durchmesser D_{B}.

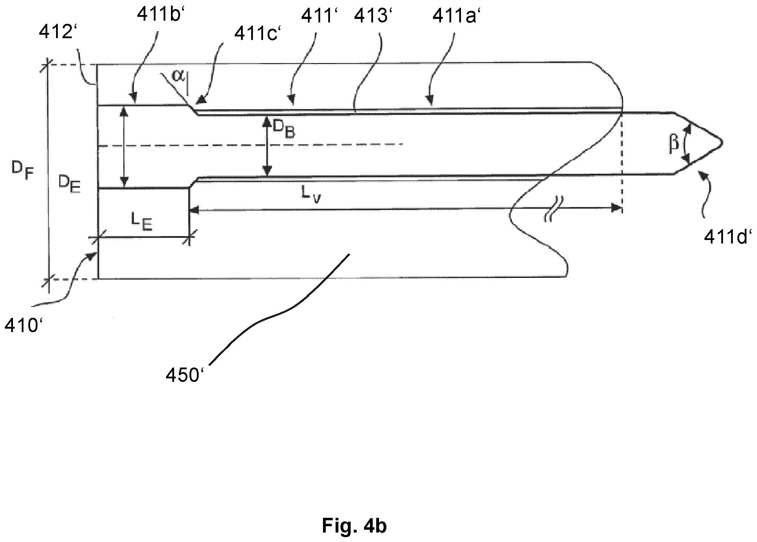

Fig. 4b zeigt einen schematischen Längsschnitt durch eine Ausnehmung 411' in einer Anschlussschnittstelle 410`. Im Unterschied zu dem in Fig. 4a gezeigten Ausführungsbeispiel wird in dem in Fig. 4b gezeigten Ausführungsbeispiel die Anschlussschnittstelle 410' durch ein Rotorblattkomponentensegment 450' gebildet. Die Ausnehmung 411' ist in einem Holmgurt des Rotorblattkomponentensegments 450` angeordnet. Der übrige Aufbau ist analog zum in Fig. 4a gezeigten Ausführungsbeispiel.

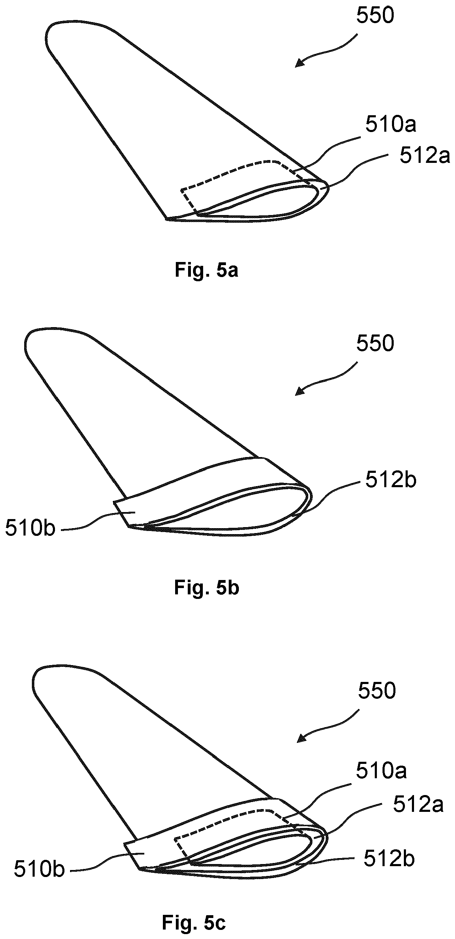

Fig. 5a zeigt ein Rotorblattsegment 550 mit einer am Anschlussende des Rotorblattsegments 550 aufgebrachten Anschlussschnittstelle 510a. Die Anschlussschnittstelle 510a ist auf der Innenseite des Anschlussendes des Rotorblattsegments 550 angeordnet. Die Anschlussschnittstelle weist eine Stirnfläche 512a auf, die mit der Stirnfläche des Anschlussendes des Rotorblattsegments 550 fluchtet.

Fig. 5b zeigt ein Rotorblattsegment 550 mit einer am Anschlussende des Rotorblattsegments 550 aufgebrachten Anschlussschnittstelle 510b. Die Anschlussschnittstelle 510b ist auf der Außenseite des Anschlussendes des Rotorblattsegments 550 angeordnet. Die Anschlussschnittstelle weist eine Stirnfläche 512b auf, die mit der Stirnfläche des Anschlussendes des Rotorblattsegments 550 fluchtet.

Fig. 5c zeigt ein Rotorblattsegment 550 mit einer am Anschlussende des Rotorblattsegments 550 aufgebrachten Anschlussschnittstelle 510, 510b. Die Anschlussschnittstelle 510a, 510b ist auf der Innenseite und auf der Außenseite des Anschlussendes des Rotorblattsegments 550 angeordnet. Die Anschlussschnittstelle weist eine Stirnfläche 512a, 512b auf, die mit der Stirnfläche des Anschlussendes des Rotorblattsegments 550 fluchtet.

Über diese Anschlussschnittstelle 510a, 510b kann das Rotorblattsegment mittels Verbindungselementen und/oder Zugelementen mit einem Teststand fixiert werden zum Testen des Rotorblattsegments.

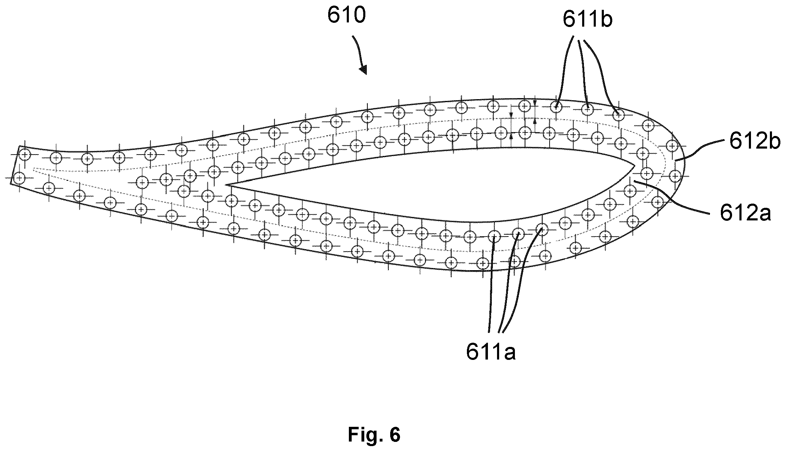

Fig. 6 zeigt eine Draufsicht einer Anschlussschnittstelle 610 eines Rotorblattsegments. Die Anschlussschnittstelle 610 ist innen und außen am Anschlussende des Rotorblattsegments aufgebracht. Die Anschlussschnittstelle 610 umfasst somit einen auf der Innenseite aufgebrachten Teil mit einer Stirnfläche 612a des auf der Innenseite aufgebrachten Teils und einen auf der Außenseite aufgebrachten Teil mit einer Stirnfläche 612b des auf der Außenseite aufgebrachten Teils. Die Stirnfläche der Anschlussschnittstelle 612a, 612b fluchtet mit der Stirnfläche des Anschlussendes des Rotorblattsegments. Die Ausnehmungen 611a, 611b an der Anschlussschnittstelle 610 sind zweireihig ausgebildet. Die Anschlussschnittstelle 610 weist innere Ausnehmungen 611a und äußere Ausnehmungen 611b auf. Über diese Anschlussschnittstelle 610 kann das Rotorblattsegment mittels Verbindungselementen und/oder Zugelementen mit einem Teststand verbunden werden.

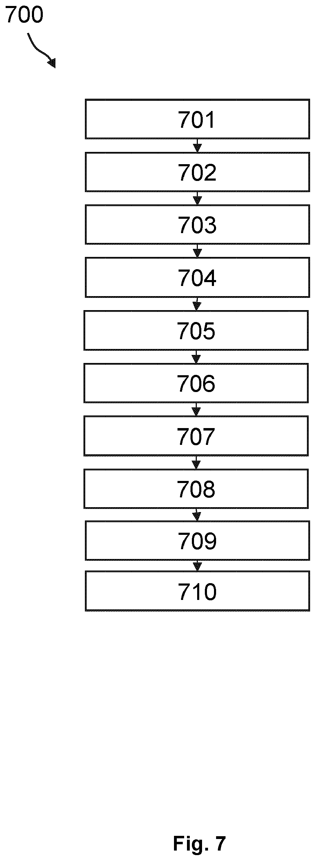

Fig. 7 zeigt eine schematische Darstellung eines Verfahren 700 zum Testen einer Rotorblattkomponente eines Rotorblatts für eine Windenergieanlage. Das Verfahren 700 umfasst die folgenden Schritte: In einem Schritt 701, Herstellen der Rotorblattkomponente eines Rotorblatts für eine Windenergieanlage. In einem Schritt 702, Teilen einer Rotorblattkomponente eines Rotorblatts für eine Windenergieanlage in zwei, drei oder mehrere Rotorblattkomponentensegmente. In einem Schritt 703, Aufbringen der Anschlussschnittstelle an ein Anschlussende eines der Rotorblattkomponentensegmente. In einem Schritt 704, Einbringen von Ausnehmungen in die Anschlussschnittstelle an dem Anschlussende und vorzugsweise Herstellen von ebenen Abschnitten an der Stirnfläche der Anschlussschnittstelle im Bereich der Öffnungen der Ausnehmungen, vorzugsweise mittels Bohren und/oder Planfräsen, und vorzugsweise Anordnen von Distanzstücken auf der Stirnfläche im Bereich der Ausnehmungen. Es ist bevorzugt, wenn die Distanzstücke individuell angepasste Dicken aufweisen, sodass die Distanzstücke Unebenheiten ausgleichen können. In einem Schritt 705, Anordnen von Verbindungselementen und/oder Zugelementen in einigen oder allen Ausnehmungen und vorzugsweise Aufbringen einer Spachtelmasse auf die Stirnfläche der Anschlussschnittstelle. Die Spachtelmasse kann Epoxidharz umfassen oder im Wesentlichen daraus bestehen. In einem Schritt 706, Transportieren des Rotorblattkomponentensegments zu einem Teststand. In einem Schritt 707, Anschließen des Rotorblattkomponentensegments an einen Teststand. In einem Schritt 708, Testen des Rotorblattkomponentensegments an einem Teststand. In einem Schritt 709, Demontieren des Rotorblattkomponentensegments von einem Teststand. In einem Schritt 710, Entsorgen des Rotorblattkomponentensegments.

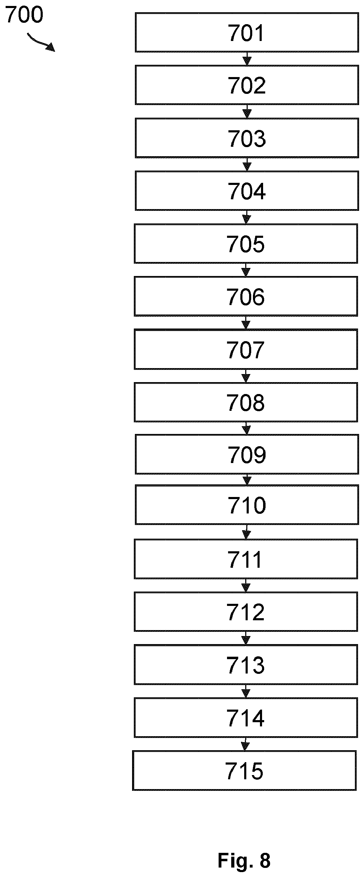

Fig. 8 zeigt eine schematische Darstellung eines Verfahren 700 zum Testen einer Rotorblattkomponente eines Rotorblatts für eine Windenergieanlage. Das in Fig. 7 beschriebene Verfahren umfasst dabei ferner zusätzlichen Schritte: In einem Schritt 711, Transportieren eines weiteren Rotorblattkomponentensegments oder aller weiteren Rotorblattkomponentensegmente derselben Rotorblattkomponente zu einem Teststand. In einem Schritt 712, Anschließen eines weiteren Rotorblattkomponentensegments oder aller weiteren Rotorblattkomponentensegmente derselben Rotorblattkomponente an einen Teststand. In einem Schritt 713, Testen eines weiteren Rotorblattkomponentensegments oder aller weiteren Rotorblattkomponentensegmente derselben Rotorblattkomponente an einem Teststand. In einem Schritt 714, Demontieren eines weiteren Rotorblattkomponentensegments oder aller weiteren Rotorblattkomponentensegmente derselben Rotorblattkomponente von einem Teststand. In einem Schritt 715, Entsorgen eines weiteren Rotorblattkomponentensegments oder aller weiteren Rotorblattkomponentensegmente derselben Rotorblattkomponente.

### Bezugszeichenliste

- 100: Windenergieanlage
- 102: Turm
- 104: Gondel
- 106: Rotor
- 108: Rotorblätter
- 109: Rotorblattwurzeln
- 110: Spinner
- 210, 310, 410, 510a, 510b, 610, 310`, 410`: Anschlussschnittstelle
- 211, 311, 411, 611a, 611b, 311', 411': Ausnehmungen
- 212, 312, 412, 512a, 512b, 612a, 612b, 312', 412': Stirnfläche der Anschlussschnittstelle
- 220, 320: Zugelement
- 250,550: Rotorblattsegment
- 260, 360: Stirnfläche des Anschlussendes des Rotorblattsegments
- 311a, 411a, 311a', 411a': Schaftteil der Ausnehmung
- 311b, 411b, 311b', 411b': Kopfteil der Ausnehmung
- 330, 330': Klebstoff
- 340: Distanzstück
- 345: Spachtelmasse
- 350, 450, 350', 450': Rotorblattkomponentensegment
- 380: Stahladapter
- 381: Unterlegscheibe
- 382: Mutter
- 411c, 411c': Übergangsabschnitt der Ausnehmung
- 411d, 411d': Endabschnitt der Ausnehmung
- 413, 413`: Innengewinde
- 700 - 715: Verfahrensschritte
- D: Durchmesser des Zugelements
- D_{F}: Ausdehnung der Anschlussschnittstelle
- D_{B}: erster Durchmesser
- Dε: zweiter Durchmesser
- L_{B1}: Länge des in der Ausnehmung aufgenommenen Teils des Zugelements
- L_{B2}: Länge des aus der Ausnehmung herausragenden Teils des Zugelements
- Lε: Länge des Kopfteils der Ausnehmung
- L_{G}: Grundlänge
- Lv: Länge des Schaftteils der Ausnehmung

## Patentansprüche

1. Verfahren (700) zum Testen einer Rotorblattkomponente eines Rotorblatts (108) für eine Windenergieanlage (100),
umfassend:
- Teilen einer Rotorblattkomponente eines Rotorblatts (108) für eine Windenergieanlage (100) in zwei, drei oder mehrere Rotorblattkomponentensegmente (350, 450, 350', 450`),
- Einbringen von Ausnehmungen (211, 311, 411, 611a, 611b, 311', 411') in eine Anschlussschnittstelle (210, 310, 410, 510a, 510b, 610, 310`, 410`) an einem Anschlussende eines der Rotorblattkomponentensegmente (350, 450, 350', 450`),
- Testen des Rotorblattkomponentensegments (350, 450, 350', 450`) an einem Teststand,
- wobei Distanzstücke (340) auf einer Stirnfläche (212, 312, 412, 512a, 512b, 612a, 612b, 312', 412`) der Anschlussschnittstelle (210, 310, 410, 510a, 510b, 610, 310', 410`) im Bereich von Öffnungen der Ausnehmungen (211, 311, 411, 611a, 611b, 311', 411') angeordnet werden, und/oder auf eine Stirnfläche (212, 312, 412, 512a, 512b, 612a, 612b, 312', 412`) der Anschlussschnittstelle (210, 310, 410, 510a, 510b, 610, 310`, 410') im Bereich von Öffnungen der Ausnehmungen (211, 311, 411, 611a, 611b, 311', 411') eine Spachtelmasse (345) aufgebracht wird und/oder angeordnet ist, insbesondere um Unebenheiten auszugleichen,
**dadurch gekennzeichnet, dass**
- an einer Stirnfläche (212, 312, 412, 512a, 512b, 612a, 612b, 312', 412') der Anschlussschnittstelle (210, 310, 410, 510a, 510b, 610, 310`, 410') im Bereich von Öffnungen der Ausnehmungen (211, 311, 411, 611a, 611b, 311', 411') ebene Flächen hergestellt werden,
- wobei die ebenen Flächen auf zwei oder mehreren verschiedenen Ebenen liegen, und
- wobei die Abstände der ebenen Flächen von einer gemeinsamen Bezugsebene ermittelt und die Dicken der Distanzstücke (340) und/oder Spachtelmasse (345) auf diese gemessenen Abstände angepasst werden.

2. Verfahren (700) nach dem vorhergehenden Anspruch,
**dadurch gekennzeichnet, dass**
- die Distanzstücke (340) voneinander abweichende Dicken aufweisen, und/oder
- die Distanzstücke (340) individuell angepasste Dicken aufweisen, sodass die Distanzstücke (340) Unebenheiten ausgleichen können, und/oder
- die Distanzstücke (340) unterschiedliche Dicken aufweisen, wobei die Dicken vorzugsweise so ausgewählt sind, dass die Stirnseiten der Distanzstücke (340), die mit einem Stahladapter (380) in Verbindung gebracht werden können, in einer gemeinsamen Ebene liegen,
und/oder
- die Spachtelmasse (345) an unterschiedlichen Stellen voneinander abweichende Dicken aufweist, wobei vorzugsweise die Dicken so ausgewählt sind, dass die Spachtelmasse (345) auf der Seite, auf der die Spachtelmasse (345) mit einem Stahladapter (380) gebracht werden kann, eine Ebene bildet.

3. Verfahren (700) nach mindestens einem der vorhergehenden Ansprüche,
- wobei die ebenen Flächen mittels Bohren und/oder Planfräsen, hergestellt werden.

4. Verfahren (700) nach dem vorhergehenden Anspruch,
**dadurch gekennzeichnet, dass**
- die Distanzstücke (340) an den hergestellten ebenen Flächen an der Stirnfläche (212, 312, 412, 512a, 512b, 612a, 612b, 312', 412`) der Anschlussschnittstelle (210, 310, 410, 510a, 510b, 610, 310`, 410`) angeordnet werden,
und/oder
- die Spachtelmasse (345) an den hergestellten ebenen Flächen an der Stirnfläche (212, 312, 412, 512a, 512b, 612a, 612b, 312', 412`) der Anschlussschnittstelle (210, 310, 410, 510a, 510b, 610, 310`, 410`) aufgebracht wird und/oder angeordnet ist.

5. Verfahren (700) nach mindestens einem der vorhergehenden Ansprüche, **dadurch gekennzeichnet, dass**
- die Rotorblattkomponente ein Rotorblatt (108) oder eine Hinterkante eines Rotorblatts oder eine Endkante eines Rotorblatts (108) ist.

6. Verfahren (700) nach mindestens einem der vorhergehenden Ansprüche, **gekennzeichnet durch**
- Aufbringen der Anschlussschnittstelle (210, 310, 410, 510a, 510b, 610, 310`, 410`) an das Anschlussende, und/oder
- Herstellen der Rotorblattkomponente eines Rotorblatts für eine Windenergieanlage, und/oder
- Anordnen von Verbindungselementen und/oder Zugelementen in einigen oder allen Ausnehmungen (211, 311, 411, 611a, 611b, 311', 411'), und/oder
- Transportieren des Rotorblattkomponentensegments (350, 450, 350', 450`) zu einem Teststand, und/oder
- Anschließen des Rotorblattkomponentensegments (350, 450, 350', 450`) an einen Teststand, und/oder
- Demontieren des Rotorblattkomponentensegments (350, 450, 350', 450`) von einem Teststand, und/oder
- Entsorgen des Rotorblattkomponentensegments (350, 450, 350', 450`).

7. Verfahren (700) nach mindestens einem der vorhergehenden Ansprüche, **dadurch gekennzeichnet, dass**
- einige oder alle Ausnehmungen (211, 311, 411, 611a, 611b, 311', 411') gleich ausgebildet sind, und/oder
- einige oder alle Ausnehmungen (211, 311, 411, 611a, 611b, 311', 411') ausgebildet sind zur Aufnahme von Verbindungselementen und/oder Zugelementen zum Anschließen des Rotorblattkomponentensegments (350, 450, 350', 450`) an einen Teststand, und/oder
- eine jeweilige Umfangsfläche einiger oder aller Ausnehmungen (211, 311, 411, 611a, 611b, 311', 411') von einem Anschlussmaterial gebildet ist, und/oder
- einige oder alle Ausnehmungen (211, 311, 411, 611a, 611b, 311', 411') als Sacklöcher ausgebildet sind, und/oder
- einige oder alle Ausnehmungen (211, 311, 411, 611a, 611b, 311', 411') als Durchgangslöcher ausgebildet sind, und/oder
- eine jeweilige Umfangsfläche einiger oder aller Ausnehmungen (211, 311, 411, 611a, 611b, 311', 411') ein Innengewinde (413, 413')aufweist, und/oder
- einige oder alle Ausnehmungen (211, 311, 411, 611a, 611b, 311', 411') als Bohrungen ausgebildet sind, und/oder
- einige oder alle Ausnehmungen (211, 311, 411, 611a, 611b, 311', 411') äquidistant voneinander beabstandet sind.

8. Verfahren (700) nach mindestens einem der vorhergehenden Ansprüche, **dadurch gekennzeichnet, dass**
- die Anschlussschnittstelle (210, 310, 410, 510a, 510b, 610, 310`, 410`) ein Anschlussmaterial umfasst oder daraus besteht, und/oder
- das Aufbringen einer Anschlussschnittstelle (210, 310, 410, 510a, 510b, 610, 310`, 410`) ein Auflaminieren von Anschlussmaterial ist oder umfasst, und/oder
- ein erstes Ende der Anschlussschnittstelle (210, 310, 410, 510a, 510b, 610, 310', 410`) mit dem Anschlussende des Rotorblattkomponentensegments (350, 450, 350`, 450`) fluchtet, und/oder
- ein zweites Ende der Anschlussschnittstelle (210, 310, 410, 510a, 510b, 610, 310`, 410`) beabstandet ist von einem dem Anschlussende des Rotorblattkomponentensegments (350, 450, 350`, 450`) gegenüberliegenden Ende des Rotorblattkomponentensegments (350, 450, 350', 450'), und/oder
- das erste und das zweite Ende der Anschlussschnittstelle (210, 310, 410, 510a, 510b, 610, 310`, 410`) parallel zueinander sind.

9. Verfahren (700) nach mindestens einem der vorhergehenden Ansprüche, **dadurch gekennzeichnet, dass**
- das Anschlussmaterial ein faserverstärktes Verbundmaterial, insbesondere ein Faser-Kunststoff-Verbundmaterial, vorzugsweise ein glasfaserverstärktes Epoxidharz-Verbundmaterial, ist oder ein solches umfasst, und/oder
- das Anschlussmaterial mit einem Material der Rotorblattkomponente identisch und/oder gegenüber einem Material der Rotorblattkomponente verstärkt ist, und/oder
- die Anschlussschnittstelle (210, 310, 410, 510a, 510b, 610, 310`, 410`) auf einer Innenseite und/oder einer Außenseite des Anschlussendes des Rotorblattkomponentensegments (350, 450, 350', 450`) angeordnet ist, und/oder
- sich die Anschlussschnittstelle (210, 310, 410, 510a, 510b, 610, 310`, 410`) über einen Großteil oder den gesamten Innenumfang und/oder Außenumfang des Anschlussendes des Rotorblattkomponentensegments (350, 450, 350`, 450`) erstreckt.

10. Verfahren (700) nach mindestens einem der vorhergehenden Ansprüche, **gekennzeichnet durch**
- Transportieren eines weiteren Rotorblattkomponentensegments (350, 450, 350', 450`) oder aller weiteren Rotorblattkomponentensegmente (350, 450, 350', 450`) derselben Rotorblattkomponente zu einem Teststand, und/oder
- Anschließen eines weiteren Rotorblattkomponentensegments (350, 450, 350', 450`) oder aller weiteren Rotorblattkomponentensegmente (350, 450, 350', 450`) derselben Rotorblattkomponente an einen Teststand, und/oder
- Testen eines weiteren Rotorblattkomponentensegments (350, 450, 350', 450`) oder aller weiteren Rotorblattkomponentensegmente (350, 450, 350', 450`) derselben Rotorblattkomponente an einem Teststand, und/oder
- Demontieren eines weiteren Rotorblattkomponentensegments (350, 450, 350', 450`) oder aller weiteren Rotorblattkomponentensegmente (350, 450, 350', 450`) derselben Rotorblattkomponente von einem Teststand.

11. Verfahren (700) nach mindestens einem der vorhergehenden Ansprüche, **gekennzeichnet durch**
- Entsorgen eines weiteren Rotorblattkomponentensegments (350, 450, 350', 450`) oder aller weiteren Rotorblattkomponentensegmente (350, 450, 350', 450`) derselben Rotorblattkomponente.

12. Verfahren (700) nach mindestens einem der vorhergehenden Ansprüche, **dadurch gekennzeichnet, dass**
- die Anschlussschnittstelle (210, 310, 410, 510a, 510b, 610, 310`, 410`) eine Dicke aufweist, die mindestens dem 1,5-fachen eines Durchmessers einiger oder aller Ausnehmungen (211, 311, 411, 611a, 611b, 311', 411') entspricht, insbesondere mindestens dem 2-fachen, mindestens dem 2,5-fachen oder mindestens dem 3-fachen eines Durchmessers einiger oder aller Ausnehmungen (211, 311, 411, 611a, 611b, 311', 411'), und/oder
- die Anschlussschnittstelle (210, 310, 410, 510a, 510b, 610, 310`, 410`) eine Dicke aufweist von mindestens 2 cm, vorzugsweise von mindestens 3 cm, von mindestens 4 cm, von mindestens 5 cm, von mindestens 6 cm, von mindestens 7 cm, von mindestens 8 cm, von mindestens 9 cm, von mindestens 10 cm, von mindestens 11 cm, von mindestens 12 cm, oder von mindestens 15 cm, und/oder
- die Anschlussschnittstelle (210, 310, 410, 510a, 510b, 610, 310`, 410`) eine Tiefe aufweist, die mindestens dem 2-fachen eines Durchmessers einiger oder aller Ausnehmungen (211, 311, 411, 611a, 611b, 311', 411') entspricht, insbesondere mindestens dem 3-fachen, mindestens dem 6-fachen oder mindestens dem 12-fachen eines Durchmessers einiger oder aller Ausnehmungen (211, 311, 411, 611a, 611b, 311', 411'), und/oder
- die Anschlussschnittstelle (210, 310, 410, 510a, 510b, 610, 310`, 410`) eine Tiefe aufweist von mindestens 10 cm, vorzugsweise von mindestens 15 cm, von mindestens 20 cm, von mindestens 25 cm, von mindestens 30 cm, von mindestens 35 cm, von mindestens 40 cm, von mindestens 45 cm, oder von mindestens 50 cm.

13. Rotorblattkomponentensegment (350, 450, 350`, 450`) eines Rotorblatts (108) für eine Windenergieanlage (100), das Rotorblattkomponentensegment (350, 450, 350`, 450`) umfassend
- ein Anschlussende, das durch Teilen einer Rotorblattkomponente eines Rotorblatts (108) für eine Windenergieanlage (100) in zwei, drei oder mehrere Rotorblattkomponentensegmente (350, 450, 350', 450`) entstanden ist,
- eine Anschlussschnittstelle (210, 310, 410, 510a, 510b, 610, 310`, 410`) am Anschlussende des Rotorblattkomponentensegments (350, 450, 350', 450'),
- in die Anschlussschnittstelle (210, 310, 410, 510a, 510b, 610, 310`, 410`) eingebrachte Ausnehmungen (211, 311, 411, 611a, 611b, 311', 411') zum Anschließen des Rotorblattkomponentensegments (350, 450, 350', 450`) an einen Teststand,
wobei
- Distanzstücke (340) auf einer Stirnfläche (212, 312, 412, 512a, 512b, 612a, 612b, 312', 412') der Anschlussschnittstelle (210, 310, 410, 510a, 510b, 610, 310`, 410') im Bereich von Öffnungen der Ausnehmungen (211, 311, 411, 611a, 611b, 311', 411') angeordnet sind, und/oder auf eine Stirnfläche (212, 312, 412, 512a, 512b, 612a, 612b, 312', 412`) der Anschlussschnittstelle (210, 310, 410, 510a, 510b, 610, 310`, 410`) im Bereich von Öffnungen der Ausnehmungen (211, 311, 411, 611a, 611b, 311', 411') eine Spachtelmasse (345) aufgebracht und/oder angeordnet ist, insbesondere um Unebenheiten auszugleichen,
**dadurch gekennzeichnet, dass**
- an einer Stirnfläche (212, 312, 412, 512a, 512b, 612a, 612b, 312', 412') der Anschlussschnittstelle (210, 310, 410, 510a, 510b, 610, 310`, 410`) im Bereich von Öffnungen der Ausnehmungen (211, 311, 411, 611a, 611b, 311', 411') ebene Flächen hergestellt sind,
- wobei die ebenen Flächen auf zwei oder mehreren verschiedenen Ebenen liegen, und
- wobei die Abstände der ebenen Flächen von einer gemeinsamen Bezugsebene ermittelt und die Dicken der Distanzstücke (340) und/oder Spachtelmasse (345) auf diese gemessenen Abstände angepasst sind.

14. Rotorblattkomponentensegment (350, 450, 350', 450`) nach dem vorhergehenden Anspruch,
**dadurch gekennzeichnet, dass**
- auf einer Stirnfläche (212, 312, 412, 512a, 512b, 612a, 612b, 312', 412') der Anschlussschnittstelle (210, 310, 410, 510a, 510b, 610, 310`, 410') im Bereich von Öffnungen der Ausnehmungen (211, 311, 411, 611a, 611b, 311', 411') Distanzstücke (340) angeordnet sind, und/oder
- auf einer Stirnfläche (212, 312, 412, 512a, 512b, 612a, 612b, 312', 412') der Anschlussschnittstelle (210, 310, 410, 510a, 510b, 610, 310`, 410') im Bereich von Öffnungen der Ausnehmungen (211, 311, 411, 611a, 611b, 311', 411') eine Spachtelmasse (345) aufgebracht und/oder angeordnet ist.

## Claims

1. Method (700) for testing a rotor blade component of a rotor blade (108) for a wind power installation (100),
comprising:
- dividing a rotor blade component of a rotor blade (108) for a wind power installation (100) into two, three or more rotor blade component segments (350, 450, 350', 450`),
- forming cutouts (211, 311, 411, 611a, 611b, 311',411') in a connection interface (210, 310, 410, 510a, 510b, 610, 310', 410') at a connection end of one of the rotor blade component segments (350, 450, 350', 450`)
- testing the rotor blade component segment (350, 450, 350', 450`) at a test stand,
- wherein spacers (340) are arranged on a face surface (212, 312, 412, 512a, 512b, 612a, 612b, 312', 412') of the connection interface (210, 310, 410, 510a, 510b, 610, 310', 410') in the region of openings of the cutouts (211, 311, 411, 611a, 611b, 311', 411'),
and/or
- a filler compound (345) is applied and/or arranged on a face surface (212, 312, 412, 512a, 512b, 612a, 612b, 312', 412') of the connection interface (210, 310, 410, 510a, 510b, 610, 310', 410') in the region of openings of the cutouts (211, 311, 411, 611a, 611b, 311', 411'), in particular to compensate unevennesses,
**characterized in that**
- planar surfaces are produced on a face surface (212, 312, 412, 512a, 512b, 612a, 612b, 312', 412') of the connection interface (210, 310, 410, 510a, 510b, 610, 310', 410') in the region of openings of the cutouts (211, 311, 411, 611a, 611b, 311', 411`),
- wherein the planar surfaces lie on two or more different planes, and
- wherein the distances of the planar surfaces from a common reference plane are determined and the thicknesses of the spacers (340) and/or the filler compound (345) are adjusted to these measured distances.

2. Method (700) according to the preceding claim,
**characterized in that**
- the spacers (340) have mutually different thicknesses,
and/or
- the spacers (340) have individually matched thicknesses, such that the spacers (340) can compensate unevennesses,
and/or
- the spacers (340) have different thicknesses, wherein preferably the thicknesses are selected in such a way that those face sides of the spacers (340) which are connectable to a steel adaptor (380) lie in a common plane,
and/or
- the filler compound (345) has, at different positions, mutually different thicknesses, wherein preferably the thicknesses are selected in such a way that the filler compound (345) forms a plane on that side on which the filler compound (345) is connectable to a steel adaptor (380).

3. Method (700) according to at least one of the preceding claims,
- wherein the planar surfaces are produced by means of drilling and/or face-milling.

4. Method (700) according to the preceding claim,
**characterized in that**
- the spacers (340) are arranged on the planar surfaces produced on the face surface (212, 312, 412, 512a, 512b, 612a, 612b, 312', 412') of the connection interface (210, 310, 410, 510a, 510b, 610, 310', 410'),
and/or
- the filler compound (345) is applied and/or arranged on the planar surfaces produced on the face surface (212, 312, 412, 512a, 512b, 612a, 612b, 312', 412') of the connection interface (210, 310, 410, 510a, 510b, 610, 310', 410').

5. Method (700) according to at least one of the preceding claims, **characterized in that**
- the rotor blade component is a rotor blade (108) or a trailing edge of a rotor blade or an end edge of a rotor blade (108).

6. Method (700) saccording to at least one of the preceding claims,
**characterized by**
- applying the connection interface (210, 310, 410, 510a, 510b, 610, 310', 410') to the connection end, and/or
- producing the rotor blade component of a rotor blade for a wind power installation, and/or
- arranging connecting elements and/or tension elements in some or all the cutouts (211, 311, 411, 611a, 611b, 311', 411'), and/or
- transporting the rotor blade component segment (350, 450, 350', 450') to a test stand, and/or
- connecting the rotor blade component segment (350, 450, 350', 450') to a test stand, and/or
- dismounting the rotor blade component segment (350, 450, 350', 450') from a test stand, and/or
- disposing of the rotor blade component segment (350, 450, 350', 450').

7. Method (700) according to at least one of the preceding claims,
**characterized in that**
- some or all the cutouts (211, 311, 411, 611a, 611b, 311', 411') are of identical form, and/or
- some or all the cutouts (211, 311, 411, 611a, 611b, 311', 411') are configured for receiving connecting elements and/or tension elements for connecting the rotor blade component segment (350, 450, 350', 450') to a test stand, and/or
- a respective peripheral surface of some or all the cutouts (211, 311, 411, 611a, 611b, 311',411') is formed by a connection material, and/or
- some or all the cutouts (211, 311, 411, 611a, 611b, 311', 411') are in the form of blind holes, and/or
- some or all the cutouts (211, 311, 411, 611a, 611b, 311', 411') are in the form of passage holes, and/or
- a respective peripheral surface of some or all the cutouts (211, 311, 411, 611a, 611b, 311',411') has an inner thread (413, 413') , and/or
- some or all the cutouts (211, 311, 411, 611a, 611b, 311', 411') are in the form of bores, and/or
- some or all the cutouts (211, 311, 411, 611a, 611b, 311', 411') are spaced apart equidistantly from one another.

8. Method (700) according to at least one of the preceding claims,
**characterized in that**
- the connection interface (210, 310, 410, 510a, 510b, 610, 310', 410`) comprises a connection material or consists thereof, and/or
- applying a connection interface (210, 310, 410, 510a, 510b, 610, 310', 410`) is or comprises laminating on connection material, and/or
- a first end of the connection interface (210, 310, 410, 510a, 510b, 610, 310', 410') is aligned with the connection end of the rotor blade component segment (350, 450, 350', 450'), and/or
- a second end of the connection interface (210, 310, 410, 510a, 510b, 610, 310', 410`) is spaced apart from an end of the rotor blade component segment (350, 450, 350', 450') that is situated opposite the connection end of the rotor blade component segment (350, 450, 350', 450'), and/or
- the first and second ends of the connection interface (210, 310, 410, 510a, 510b, 610, 310', 410`) are parallel to one another.

9. Method (700) according to at least one of the preceding claims,
**characterized in that**
- the connection material is a fibre-reinforced composite material, in particular a fibre/plastic composite material, preferably a glass fibre-reinforced epoxy resin composite material, or comprises such a material, and/or
- the connection material is identical to a material of the rotor blade component and/or is reinforced in relation to a material of the rotor blade component, and/or
- the connection interface (210, 310, 410, 510a, 510b, 610, 310', 410`) is arranged on an inner side and/or an outer side of the connection end of the rotor blade component segment (350, 450, 350', 450'), and/or
- the connection interface (210, 310, 410, 510a, 510b, 610, 310', 410`) extends over the majority of or the entire inner periphery and/or outer periphery of the connection end of the rotor blade component segment (350, 450, 350', 450').

10. Method (700) according to at least one of the preceding claims,
**characterized by**
- transporting a further rotor blade component segment (350, 450, 350', 450') or all the further rotor blade component segments (350, 450, 350', 450') of the same rotor blade component to a test stand, and/or
- connecting a further rotor blade component segment (350, 450, 350', 450') or all the further rotor blade component segments (350, 450, 350', 450') of the same rotor blade component to a test stand, and/or
- testing a further rotor blade component segment (350, 450, 350', 450') or all the further rotor blade component segments (350, 450, 350', 450') of the same rotor blade component at a test stand, and/or
- dismounting a further rotor blade component segment (350, 450, 350', 450') or all the further rotor blade component segments (350, 450, 350', 450') of the same rotor blade component from a test stand.

11. Method (700) according to at least one of the preceding claims,
**characterized by**
- disposing of a further rotor blade component segment (350, 450, 350', 450') or all the further rotor blade component segments (350, 450, 350', 450') of the same rotor blade component.

12. Method (700) according to at least one of the preceding claims,
**characterized in that**
- the connection interface (210, 310, 410, 510a, 510b, 610, 310', 410`) has a thickness which corresponds to at least 1.5 times a diameter of some or all the cutouts (211, 311, 411, 611a, 611b, 311',411`), in particular to at least 2 times, to at least 2.5 times or to at least 3 times a diameter of some or all the cutouts (211, 311, 411, 611a, 611b, 311', 411'), and/or
- the connection interface (210, 310, 410, 510a, 510b, 610, 310', 410`) has a thickness of at least 2 cm, preferably of at least 3 cm, of at least 4 cm, of at least 5 cm, of at least 6 cm, of at least 7 cm, of at least 8 cm, of at least 9 cm, of at least 10 cm, of at least 11 cm, of at least 12 cm or of at least 15 cm, and/or
- the connection interface (210, 310, 410, 510a, 510b, 610, 310', 410`) has a depth which corresponds to at least 2 times a diameter of some or all the cutouts (211, 311, 411, 611a, 611b, 311',411`), in particular to at least 3 times, to at least 6 times or to at least 12 times a diameter of some or all the cutouts (211, 311, 411, 611a, 611b, 311',411`), and/or
- the connection interface (210, 310, 410, 510a, 510b, 610, 310', 410`) has a depth of at least 10 cm, preferably of at least 15 cm, of at least 20 cm, of at least 25 cm, of at least 30 cm, of at least 35 cm, of at least 40 cm, of at least 45 cm or of at least 50 cm.

13. Rotor blade component segment (350, 450, 350', 450') of a rotor blade (108) for a wind power installation (100), the rotor blade component segment (350, 450, 350', 450') comprising
- a connection end which has been formed by dividing a rotor blade component of a rotor blade (108) for a wind power installation (100) into two, three or more rotor blade component segments (350, 450, 350', 450'),
- a connection interface (210, 310, 410, 510a, 510b, 610, 310', 410`) at the connection end of the rotor blade component segment (350, 450, 350', 450'),
- cutouts (211, 311, 411, 611a, 611b, 311',411`) which are formed in the connection interface (210, 310, 410, 510a, 510b, 610, 310', 410`) and serve for connection of the rotor blade component segment (350, 450, 350', 450') to a test stand,
wherein
- spacers (340) are arranged on a face surface (212, 312, 412, 512a, 512b, 612a, 612b, 312', 412') of the connection interface (210, 310, 410, 510a, 510b, 610, 310', 410') in the region of openings of the cutouts (211, 311, 411, 611a, 611b, 311', 411'), and/or a filler compound (345) is applied and/or arranged on a face surface (212, 312, 412, 512a, 512b, 612a, 612b, 312', 412') of the connection interface (210, 310, 410, 510a, 510b, 610, 310', 410') in the region of openings of the cutouts (211, 311, 411, 611a, 611b, 311',411`), in particular to compensate unevennesses,
**characterized in that**
- planar surfaces are produced on a face surface (212, 312, 412, 512a, 512b, 612a, 612b, 312', 412') of the connection interface (210, 310, 410, 510a, 510b, 610, 310', 410') in the region of openings of the cutouts (211, 311, 411, 611a, 611b, 311', 411`),
- wherein the planar surfaces lie on two or more different planes, and
- wherein the distances of the planar surfaces from a common reference plane are determined and the thicknesses of the spacers (340) and/or the filler compound (345) are adjusted to these measured distances.

14. Rotor blade component segment (350, 450, 350', 450') according to the preceding claim,
**characterized in that**
- spacers (340) are arranged on a face surface (212, 312, 412, 512a, 512b, 612a, 612b, 312', 412') of the connection interface (210, 310, 410, 510a, 510b, 610, 310', 410`) in the region of openings of the cutouts (211, 311, 411, 611a, 611b, 311', 411`),
and/or
- a filler compound (345) is applied and/or arranged on a face surface (212, 312, 412, 512a, 512b, 612a, 612b, 312', 412') of the connection interface (210, 310, 410, 510a, 510b, 610, 310', 410`) in the region of openings of the cutouts (211, 311, 411, 611a, 611b, 311', 411'),

## Revendications

1. Procédé (700) pour tester un composant de pale de rotor d'une pale de rotor (108) pour une éolienne (100),
comprenant :
- la division d'un composant de pale de rotor d'une pale de rotor (108) pour une éolienne (100) en deux, trois segments de composant de pale de rotor (350, 450, 350', 450') ou plus,
- l'introduction d'évidements (211, 311, 411, 611a, 611b, 311', 411') dans une interface de raccordement (210, 310, 410, 510a, 510b, 610, 310', 410') à une extrémité de raccordement d'un des segments de composant de pale de rotor (350, 450, 350', 450'),
- le test du segment de composant de pale de rotor (350, 450, 350', 450') sur un banc de test,
- dans lequel des pièces d'écartement (340) sont disposées sur une surface frontale (212, 312, 412, 512a, 512b, 612a, 612b, 312', 412') de l'interface de raccordement (210, 310, 410, 510a, 510b, 610, 310', 410') dans la zone d'ouvertures des évidements (211, 311, 411, 611a, 611b, 311', 411'), et/ou un mastic (345) est appliqué et/ou est disposé sur une surface frontale (212, 312, 412, 512a, 512b, 612a, 612b, 312', 412') de l'interface de raccordement (210, 310, 410, 510a, 510b, 610, 310', 410') dans la zone d'ouvertures des évidements (211, 311, 411, 611a, 611b, 311', 411'), en particulier pour compenser des aspérités,
**caractérisé en ce que**
- des surfaces planes sont produites sur une surface frontale (212, 312, 412, 512a, 512b, 612a, 612b, 312', 412') de l'interface de raccordement (210, 310, 410, 510a, 510b, 610, 310', 410') dans la zone d'ouvertures des évidements (211, 311, 411, 611a, 611b, 311', 411'),
- dans lequel les surfaces planes se situent sur deux plans différents ou plus, et
- dans lequel les écarts des surfaces planes sont déterminés par rapport à un plan de référence commun et les épaisseurs des pièces d'écartement (340) et/ou du mastic (345) sont adaptées à ces écarts mesurés.

2. Procédé (700) selon la revendication précédente, **caractérisé en ce que**
- les pièces d'écartement (340) présentent des épaisseurs différant les unes des autres,
et/ou
- les pièces d'écartement (340) présentent des épaisseurs adaptées individuellement, de sorte que les pièces d'écartement (340) peuvent compenser les aspérités,
et/ou
- les pièces d'écartement (340) présentent différentes épaisseurs, dans lequel les épaisseurs sont sélectionnées de préférence de sorte que les faces frontales des pièces d'écartement (340), qui peuvent être amenées en liaison avec un adaptateur en acier (380), se situent dans un plan commun,
et/ou
- le mastic (345) présente à différents endroits des épaisseurs différant les unes des autres, dans lequel de préférence les épaisseurs sont sélectionnées de sorte que le mastic (345), sur la face sur laquelle le mastic (345) peut être amené avec un adaptateur en acier (380), forme un plan.

3. Procédé (700) selon au moins l'une des revendications précédentes,
- dans lequel les surfaces planes sont produites au moyen d'un perçage et/ou surfaçage.

4. Procédé (700) selon la revendication précédente,
**caractérisé en ce que**
- les pièces d'écartement (340) sont disposées sur les surfaces planes produites sur la surface frontale (212, 312, 412, 512a, 512b, 612a, 612b, 312', 412') de l'interface de raccordement (210, 310, 410, 510a, 510b, 610, 310', 410'),
et/ou
- le mastic (345) est appliqué et/ou est disposé sur les surfaces planes produites sur la surface frontale (212, 312, 412, 512a, 512b, 612a, 612b, 312', 412') de l'interface de raccordement (210, 310, 410, 510a, 510b, 610, 310', 410').

5. Procédé (700) selon au moins l'une des revendications précédentes,
**caractérisé en ce que**
- le composant de pale de rotor est une pale de rotor (108) ou un bord de fuite d'une pale de rotor ou un bord d'extrémité d'une pale de rotor (108).

6. Procédé (700) selon au moins l'une des revendications précédentes,
**caractérisé par**
- l'application de l'interface de raccordement (210, 310, 410, 510a, 510b, 610, 310', 410') sur l'extrémité de raccordement, et/ou
- la production du composant de pale de rotor d'une pale de rotor pour une éolienne, et/ou
- la disposition d'éléments de liaison et/ou d'éléments de traction dans certains ou tous les évidements (211, 311, 411, 611a, 611b, 311', 411'), et/ou
- le transport du segment de composant de pale de rotor (350, 450, 350', 450') vers un banc de test, et/ou
- le raccordement du segment de composant de pale de rotor (350, 450, 350', 450') à un banc de test, et/ou
- le démontage du segment de composant de pale de rotor (350, 450, 350', 450') d'un banc de test, et/ou
- l'élimination du segment de composant de pale de rotor (350, 450, 350', 450').

7. Procédé (700) selon au moins l'une des revendications précédentes,
**caractérisé en ce que**
- certains ou tous les évidements (211, 311, 411, 611a, 611b, 311', 411') sont réalisés de la même façon, et/ou
- certains ou tous les évidements (211, 311, 411, 611a, 611b, 311', 411') sont réalisés pour la réception des éléments de liaison et/ou éléments de traction pour le raccordement du segment de composant de pale de rotor (350, 450, 350', 450') à un banc de test, et/ou
- une surface périphérique respective de certains ou de tous les évidements (211, 311, 411, 611a, 611b, 311', 411') est formée par un matériau de raccordement, et/ou
- certains ou tous les évidements (211, 311, 411, 611a, 611b, 311', 411') sont réalisés en tant que trous borgnes, et/ou
- certains ou tous les évidements (211, 311, 411, 611a, 611b, 311', 411') sont réalisés en tant que trous débouchants, et/ou
- une surface périphérique respective de certains ou de tous les évidements (211, 311, 411, 611a, 611b, 311', 411') présente un filetage femelle (413, 413'), et/ou
- certains ou tous les évidements (211, 311, 411, 611a, 611b, 311', 411') sont réalisés en tant que trous, et/ou
- certains ou tous les évidements (211, 311, 411, 611a, 611b, 311', 411') sont espacés les uns des autres de manière équidistante.

8. Procédé (700) selon au moins l'une des revendications précédentes,
**caractérisé en ce que**
- l'interface de raccordement (210, 310, 410, 510a, 510b, 610, 310', 410') comprend un matériau de raccordement ou est constituée de celui-ci, et/ou
- l'application d'une interface de raccordement (210, 310, 410, 510a, 510b, 610, 310', 410') est ou comprend une lamination de matériau de raccordement, et/ou
- une première extrémité de l'interface de raccordement (210, 310, 410, 510a, 510b, 610, 310', 410') est en affleurement avec l'extrémité de raccordement du segment de composant de pale de rotor (350, 450, 350', 450'), et/ou
- une deuxième extrémité de l'interface de raccordement (210, 310, 410, 510a, 510b, 610, 310', 410') est espacée d'une extrémité du segment de composant de pale de rotor (350, 450, 350', 450') opposée à l'extrémité de raccordement du segment de composant de pale de rotor (350, 450, 350', 450'), et/ou
- la première et la deuxième extrémité de l'interface de raccordement (210, 310, 410, 510a, 510b, 610, 310', 410') sont parallèles l'une à l'autre.

9. Procédé (700) selon au moins l'une des revendications précédentes,
**caractérisé en ce que**
- le matériau de raccordement est un matériau composite renforcé par des fibres, en particulier un matériau composite fibres-matière plastique, de préférence un matériau composite en résine époxyde renforcé par des fibres de verre, ou comprend un tel matériau, et/ou
- le matériau de raccordement est identique à un matériau du composant de pale de rotor et/ou est renforcé par rapport à un matériau du composant de pale de rotor, et/ou
- l'interface de raccordement (210, 310, 410, 510a, 510b, 610, 310', 410') est disposée sur une face intérieure et/ou une face extérieure de l'extrémité de raccordement du segment de composant de pale de rotor (350, 450, 350', 450'), et/ou
- l'interface de raccordement (210, 310, 410, 510a, 510b, 610, 310', 410') s'étend sur une majeure partie ou toute la périphérie intérieure et/ou périphérie extérieure de l'extrémité de raccordement du segment de composant de pale de rotor (350, 450, 350', 450').

10. Procédé (700) selon au moins l'une des revendications précédentes,
**caractérisé par**
- le transport d'un autre segment de composant de pale de rotor (350, 450, 350', 450') ou de tous les autres segments de composant de pale de rotor (350, 450, 350', 450') du même composant de pale de rotor vers un banc de test, et/ou
- le raccordement d'un autre segment de composant de pale de rotor (350, 450, 350', 450') ou de tous les autres segments de composant de pale de rotor (350, 450, 350', 450') du même composant de pale de rotor à un banc de test, et/ou
- le test d'un autre segment de composant de pale de rotor (350, 450, 350', 450') ou de tous les autres segments de composant de pale de rotor (350, 450, 350', 450') du même composant de pale de rotor sur un banc de test, et/ou
- le démontage d'un autre segment de composant de pale de rotor (350, 450, 350', 450') ou de tous les autres segments de composant de pale de rotor (350, 450, 350', 450') du même composant de pale de rotor d'un banc de test.

11. Procédé (700) selon au moins l'une des revendications précédentes,
**caractérisé par**
- l'élimination d'un autre segment de composant de pale de rotor (350, 450, 350', 450') ou de tous les autres segments de composant de pale de rotor (350, 450, 350', 450') du même composant de pale de rotor.

12. Procédé (700) selon au moins l'une des revendications précédentes,
**caractérisé en ce que**
- l'interface de raccordement (210, 310, 410, 510a, 510b, 610, 310', 410') présente une épaisseur qui correspond à au moins 1,5 fois un diamètre de certains ou de tous les évidements (211, 311, 411, 611a, 611b, 311', 411'), en particulier au moins 2 fois, au moins 2,5 fois ou au moins 3 fois un diamètre de certains ou de tous les évidements (211, 311, 411, 611a, 611b, 311', 411'), et/ou
- l'interface de raccordement (210, 310, 410, 510a, 510b, 610, 310', 410') présente une épaisseur d'au moins 2 cm, de préférence d'au moins 3 cm, d'au moins 4 cm, d'au moins 5 cm, d'au moins 6 cm, d'au moins 7 cm, d'au moins 8 cm, d'au moins 9 cm, d'au moins 10 cm, d'au moins 11 cm, d'au moins 12 cm, ou d'au moins 15 cm, et/ou
- l'interface de raccordement (210, 310, 410, 510a, 510b, 610, 310', 410') présente une profondeur qui correspond à au moins 2 fois un diamètre de certains ou de tous les évidements (211, 311, 411, 611a, 611b, 311', 411'), en particulier au moins 3 fois, au moins 6 fois ou au moins 12 fois un diamètre de certains ou de tous les évidements (211, 311, 411, 611a, 611b, 311', 411'), et/ou
- l'interface de raccordement (210, 310, 410, 510a, 510b, 610, 310', 410') présente une profondeur d'au moins 10 cm, de préférence d'au moins 15 cm, d'au moins 20 cm, d'au moins 25 cm, d'au moins 30 cm, d'au moins 35 cm, d'au moins 40 cm, d'au moins 45 cm, ou d'au moins 50 cm.

13. Composant de segment de pale de rotor (350, 450, 350', 450') d'une pale de rotor (108) pour une éolienne (100), le composant de segment de pale de rotor (350, 450, 350', 450') comprenant
- une extrémité de raccordement, qui est obtenue par division d'un composant de pale de rotor d'une pale de rotor (108) pour une éolienne (100) en deux, trois segments de composant de pale de rotor (350, 450, 350', 450') ou plus,
- une interface de raccordement (210, 310, 410, 510a, 510b, 610, 310', 410') sur l'extrémité de raccordement du segment de composant de pale de rotor (350, 450, 350', 450'),
- des évidements (211, 311, 411, 611a, 611b, 311', 411') introduits dans l'interface de raccordement (210, 310, 410, 510a, 510b, 610, 310', 410') pour le raccordement du segment de composant de pale de rotor (350, 450, 350', 450') à un banc de test,
dans lequel
- les pièces d'écartement (340) sont disposées sur une surface frontale (212, 312, 412, 512a, 512b, 612a, 612b, 312', 412') de l'interface de raccordement (210, 310, 410, 510a, 510b, 610, 310', 410') dans la zone d'ouvertures des évidements (211, 311, 411, 611a, 611b, 311', 411'), et/ou un mastic (345) est appliqué et/ou disposé sur une surface frontale (212, 312, 412, 512a, 512b, 612a, 612b, 312', 412') de l'interface de raccordement (210, 310, 410, 510a, 510b, 610, 310', 410') dans la zone d'ouvertures des évidements (211, 311, 411, 611a, 611b, 311', 411'), en particulier pour compenser les aspérités,
**caractérisé en ce que**
- des surfaces planes sont produites sur une surface frontale (212, 312, 412, 512a, 512b, 612a, 612b, 312', 412') de l'interface de raccordement (210, 310, 410, 510a, 510b, 610, 310', 410') dans la zone d'ouvertures des évidements (211, 311, 411, 611a, 611b, 311', 411'),
- dans lequel les surfaces planes se situent sur deux plans différents ou plus, et
- dans lequel les écarts des surfaces planes sont déterminés par un plan de référence commun et les épaisseurs des pièces d'écartement (340) et/ou du mastic (345) sont adaptées à ces écarts mesurés.

14. Composant de segment de pale de rotor (350, 450, 350', 450') selon la revendication précédente,
**caractérisé en ce que**
- les pièces d'écartement (340) sont disposées sur une surface frontale (212, 312, 412, 512a, 512b, 612a, 612b, 312', 412') de l'interface de raccordement (210, 310, 410, 510a, 510b, 610, 310', 410') dans la zone d'ouvertures des évidements (211, 311, 411, 611a, 611b, 311', 411'),
et/ou
- un mastic (345) est appliqué et/ou disposé sur une surface frontale (212, 312, 412, 512a, 512b, 612a, 612b, 312', 412') de l'interface de raccordement (210, 310, 410, 510a, 510b, 610, 310', 410') dans la zone d'ouvertures des évidements (211, 311, 411, 611a, 611b, 311', 411').
